# EUROPÄISCHE PATENTSCHRIFT

(11) **EP 3 147 071 B1**
(45) Veröffentlichungstag und Bekanntmachung des Hinweises auf die Patenterteilung: **02.01.2019**
(21) Anmeldenummer: 16187278.3
(22) Anmeldetag: 05.09.2016
(51) Int. Cl.: B23P 9/02, B24B 39/02, F16C 9/04, F16C 33/14, F16C 33/08, B21C 37/30

(54) **KALIBRIERVERFAHREN UND KALIBRIERVORRICHTUNG**
CALIBRATION METHOD AND CALIBRATION DEVICE
PROCEDE D'ETALONNAGE ET DISPOSITIF D'ETALONNAGE

(30) Priorität: 22.09.2015 DE 102015116005
(43) Veröffentlichungstag der Anmeldung: 29.03.2017
(73) Patentinhaber: Alfing Kessler Sondermaschinen GmbH, 73433 Aalen (DE)
(72) Erfinder: Koch, Thomas, 73230 Kirchheim (DE)
(74) Vertreter: Patentanwälte Bregenzer und Reule Partnerschaftsgesellschaft mbB

(56) Entgegenhaltungen:
- EP-A1- 2 923 793
- DE-A1-102010 025 067
- DE-A1-102011 001 492
- DE-U1-202009 015 852
- US-A1- 2013 204 422

## Beschreibung

Die Erfindung betrifft eine Kalibriervorrichtung zum Kalibrieren einer Lageröffnung eines Werkstücks, insbesondere eines Motorbauteils, gemäß dem Oberbegriff des Anspruchs 1. Die Erfindung betrifft ferner ein Kalibrierverfahren gemäß dem Oberbegriff des Anspruchs 14. Eine derartige Kalibriervorrichtung sowie ein Kalibrierverfahren zum Kalibrieren einer Lageröffnung eines Werkstücks gehen beispielsweise aus der DE 10 2011 001492 A1 hervor. Die EP 2 923 793 A1, die unter Artikel 54(3) EPÜ fällt, offenbart eine weitere Kalibriervorrichtung bzw. ein weiteres Kalibrierverfahren zum Kalibrieren einer Lageröffnung eines Werkstücks.

Die bekannten Kalibrierverfahren eignen sich dazu, beispielsweise Lagerhülsen oder Lagerbuchsen eines Pleuels zu kalibrieren, das heißt den Innenumfang der Lageröffnung exakt einzustellen und dabei gleichzeitig die Lagerbuchse nach radial außen zu drücken, so dass sie in einer Bohrung, zum Beispiel dem kleinen oder großen Auge des Pleuels, fest sitzen. Im einfachsten Fall wird z.B. eine Kugel als Kalibrierwerkzeug durch eine eingebaute Lagerbuchse oder Hülse durchgedrückt. Der Außendurchmesser des Kalibrierwerkzeugs ist größer als der Innendurchmesser der Lagerbuchse. Das oder ein Kalibrierwerkzeug werden auch mehrfach in die Lagerbuchse eingeführt. Beim Kalibrieren erfolgt eine radiale und axiale Umformung der Lagerbuchse, insbesondere an den Kontaktflächen zur Kalibrierkontur des Kalibrierkörpers, so dass das Material der Lagerbuchse verdichtet wird und sie zudem fester in der Bohrung des Werkstücks, z.B. des Pleuels, sitzt. Üblicherweise werden stets gleichartige Lagerinnenkonturen nacheinander mit demselben Kalibrierwerkzeug bearbeitet. In der Regel werden nämlich ganze Werkstückserien gleichartig kalibriert. Es kann aber zu gewissen Serienschwankungen kommen, sodass die Werkstücke unterschiedliche Lagerinnenkonturen aufweisen, beispielsweise im Durchmesser größere oder kleinere. An dieser Stelle sei bemerkt, dass diese Abweichungen in der Praxis sehr gering sind, jedoch durchaus dazu führen können, dass das Kalibrierwerkzeug oder das Werkstück beschädigt wird. Es ist auch möglich, dass das Kalibrierergebnis nicht optimal ist. Aus US 2013/0204422 A1 geht ein Bearbeitungssystem mit einem Bearbeitungswerkzeug zur Bearbeitung von Werkstücken, beispielsweise kalten Werkstücköffnungen und/oder zum Installieren ausdehnbarer Glieder in Löchern hervor.

Es ist daher die Aufgabe der vorliegenden Erfindung, eine verbesserte Kalibriervorrichtung und ein verbessertes Kalibrierverfahren bereitzustellen.

Diese Aufgabe wird durch eine Kalibriervorrichtung mit den Merkmalen des Anspruchs 1 und durch ein Kalibrierverfahren mit den Merkmalen des Anspruchs 14 gelöst.

Vorteilhafte Ausbildungen der Erfindung sind den Unteransprüchen zu entnehmen.

Zur Lösung der Aufgabe ist bei einer Kalibriervorrichtung der eingangs genannten Art vorgesehen, dass sie eine Kraftmesseinrichtung zur Erfassung einer bei dem Kalibrieren auf das Werkstück, insbesondere die Lager-Innenkontur, einwirkenden Kalibrierkraft und eine Steuerungseinrichtung zur Steuerung der Positioniereinrichtung in Abhängigkeit von der Kalibrierkraft aufweist.

Die Kalibrierkraft ist beispielsweise eine zu der Kalibrierungsbahn parallele Kraft. Die Kalibrierkraft entspricht beispielsweise einer Vorschubkraft, die zum Vorschieben des Kalibrierwerkzeugs durch die Lageröffnung erforderlich ist.

Die Kalibrierkraft kann beispielsweise eine zu der Vorschubbewegung erforderliche Antriebskraft der Positioniereinrichtung sein. Es ist vorteilhaft möglich, eine Stromstärke eines Stroms zu erfassen, der zu Bestromung eines Antriebsmotors der Positioniereinrichtung erforderlich ist. Die Stromstärke bildet zweckmäßigerweise ein Maß oder Äquivalent für die notwendige Antriebskraft beim Kalibrieren und somit für die Kalibrierkraft.

Es ist aber auch eine sozusagen echte Kraftmessung möglich, d.h. beispielsweise dass eine auf das Kalibrierwerkzeug oder eine Werkstück-Halterung zum Halten des Werkstücks einwirkende Stützkraft als die Kalibrierkraft erfasst wird. Wenn das Kalibrierwerkzeug auf das Werkstück einwirkt, muss das Werkstück abgestützt werden. Die hierfür erforderliche Kraft kann ein Äquivalent oder das Maß für die Kalibrierkraft sein.

Weiterhin ist möglich, dass das Kalibrierwerkzeug an einem Werkzeugträger angeordnet ist. Es ist zum Beispiel möglich, die zwischen dem Kalibrierwerkzeug und dem Werkzeugträger auftretende Kraft beim Kalibriervorgang als ein Maß oder Äquivalent für die Kalibrierkraft zum Beispiel durch einen Dehnungsmessstreifen, kapazitiv oder dergleichen anderweitig zu erfassen. Die Messeinrichtung ist also beispielsweise zwischen dem Kalibrierwerkzeug und dem Werkzeugträger angeordnet. Weiterhin kann die Messeinrichtung auch zwischen dem Werkzeugträger und einer Antriebskomponente der Positioniereinrichtung angeordnet sein, beispielsweise einer Aufnahme für den Werkzeugträger. Auch die zwischen der Antriebskomponente und dem Werkzeugträger oder der Antriebskomponente und dem Kalibrierwerkzeug auftretenden Kräfte sind durch eine entsprechend angeordnete Messeinrichtung erfassbar, sodass die Messeinrichtung die Kalibrierkraft ermitteln kann.

Die Kalibriervorrichtung weist zweckmäßigerweise optische und/oder akustische Anzeigemittel für die Kalibrierkraft, insbesondere für ein Überschreiten und/oder Unterschreiten der Kalibrierkraft, auf.

Zweckmäßigerweise ist die Steuerungseinrichtung zur Überprüfung der Kalibrierkraft anhand eines Minimal-Schwellenwerts und/oder eines Maximal-Schwellenwertes ausgestaltet. In Abhängigkeit von einer Überschreitung oder Unterschreitung eines jeweiligen Schwellenwertes durch die Kalibrierkraft kann die Steuerungseinrichtung beispielsweise die Vorschubbewegung ändern, zum Beispiel anhalten, umkehren oder dergleichen. Aber auch die Ausgabe von Warnsignalen oder sonstigen Informationen über die Unterschreitung oder Überschreitung von Schwellenwerten durch die Kalibrierkraft an Anzeigemitteln, die zweckmäßigerweise vorhanden sind, ist eine vorteilhafte Maßnahme.

Weiterhin ist es möglich, dass die Steuerungseinrichtung zum Vergleich eines Verlaufs der Kalibrierkraft mit einem vorbestimmten Verlauf ausgestaltet ist. Es ist zum Beispiel möglich, dass die Kalibrierkraft im Verlauf der Kalibrierung ansteigt und wieder abnimmt oder dergleichen. Ein derartiger typischer Verlauf ist beispielsweise in einem Speicher der Steuerungseinrichtung gespeichert. Ein derartiger Verlauf kann beispielsweise in einer Speichertabelle abgelegt sein. Ohne weiteres vorteilhaft ist es, wenn beispielsweise ein Korridor eines derartigen Verlaufs bei der Steuerungseinrichtung gespeichert ist. Wenn sich die Kalibrierkraft im Rahmen dieses Korridors befindet, kann die Kalibriervorrichtung eine Kalibrierung vollständig durchführen. Wenn jedoch Abweichungen vorhanden sind, sind Gegenmaßnahmen zweckmäßig, zum Beispiel eine Beendigung der Kalibrierung, eine Ausgabe eines Warnsignals, ein Austausch des Kalibrierwerkzeugs oder dergleichen.

Ein relativ einfacher Anwendungsfall kann zum Beispiel vorsehen, dass die Steuerungseinrichtung die Vorschubbewegung in einer vorbestimmten Form ansteuert, insbesondere beendet, und/oder ein Warnsignal, insbesondere ein optisches und/oder akustisches Warnsignal ausgibt, wenn die Kalibrierkraft einen vorbestimmten maximalen Schwellenwert überschreitet. Dieser maximale Schwellenwert kann individuell pro Lageröffnung oder Motorbauteil festgelegt oder parametrierbar sein. Somit wird beispielsweise eine Beschädigung der Lageröffnung durch eine ungeeignete Kalibrierkontur, deren Außenumfang beispielsweise zu groß ist oder eine ungeeignete Geometrie aufweist, vermieden werden. Auch eine fehlerhafte Zuordnung von Werkstück und Kalibriervorrichtung oder Kalibrierwerkzeug wird somit vermieden, insbesondere dann, wenn mehrere Kalibrierwerkzeuge zum Einsatz kommen.

Es ist aber auch möglich, dass die Steuerungseinrichtung bei Unterschreiten eines vorbestimmten minimalen Schwellenwerts der Kalibrierkraft ein Signal ausgibt, dass die Kalibrierung unzureichend ist. Auch in diesem Fall ist es möglich, dass die Steuerungseinrichtung die Positioniereinrichtung zu einem Anhalten der Vorschubbewegung ansteuert.

Bevorzugt sind die nachfolgend beschriebenen Maßnahmen, bei denen die Kalibriervorrichtung in derartigen Problemfällen, nämlich beispielsweise einer Überschreitung oder Unterschreitung eines Schwellenwerts der Kalibrierkraft Gegenmaßnahmen einleitet.

Erfindungsgemäß hat die Kalibriervorrichtung eine erste Kalibrierkontur und eine zweite Kalibrierkontur, die an ihren Außenumfängen insbesondere in Bezug auf ihren Durchmesser, unterschiedlich ausgestaltet sind. Die Steuerungseinrichtung ist zur Ansteuerung der Positioniereinrichtung in Abhängigkeit von der Kalibrierkraft zum Vorschub der ersten Kalibrierkontur und/oder der zweiten Kalibrierkontur in die Lageröffnung oder durch die Lageröffnung hindurch ausgestaltet. Ohne weiteres kann auch eine dritte Kalibrierkontur vorgesehen sein, die ebenfalls von der Steuerungseinrichtung in Abhängigkeit von der bei der Nutzung der ersten Kalibrierkontur oder der zweiten Kalibrierkontur oder beiden erfassten Kalibrierkraft eingesetzt werden kann.

Die Lageröffnung kann beispielsweise an dem Werkstück selbst oder einem Grundkörper des Werkstücks vorgesehen sein. Bevorzugt ist die Lageröffnung jedoch an einer Hülse vorgesehen, die in einer Lageraufnahme des Werkstücks aufgenommen ist.

Wenn also beispielsweise die erste Kalibrierkontur einen zu kleinen Durchmesser und/oder eine zu kleine Querschnittsfläche quer zu der Kalibrierungsbahn und/oder eine ungeeignete Außenumfangsgeometrie aufweist, kann sie beispielsweise durch die Lageröffnung ohne eine ausreichende Kalibrierwirkung zu entfalten hindurch gleiten. Dann ist die Kalibrierkraft niedrig oder vielleicht sogar gleich null. Dies wertet die Steuerungseinrichtung aus und sorgt dafür, dass die Positioniereinrichtung die zweite Kalibrierkontur zum Einsatz bringt, die beispielsweise eine geeignete Außenumfangsgeometrie und/oder einen geeigneten Querschnitt und/oder einen geeigneten Durchmesser aufweist, also zu einer Kalibrierung geeignet ist. Es kann aber auch sein, dass beispielsweise bei der Kraftmessung ermittelt wird, dass die erste Kalibrierkontur eine zu große Kalibrierkraft erfordern würde, beispielsweise weil deren Außenumfang einen zu großen Durchmesser und/oder eine ungeeignete Geometrie aufweist, der sozusagen nicht in die Lagerinnenkontur oder Lageröffnung hineinpasst. Die Steuerungseinrichtung bringt dann beispielsweise die zweite, passende Kalibrierkontur zum Einsatz. Ohne weiteres ist auch in diesem Fall möglich, dass - wenn auch die zweite Kalibrierkontur nicht geeignet ist - eine dritte oder weitere Kalibrierkontur durch die Kalibriervorrichtung durch die Lageröffnung hindurch bewegt wird oder zumindest ein Versuch gemacht wird, die Lageröffnung mit dieser dritten oder weiteren Kalibrierkontur zu kalibrieren. Auch bei diesen weiteren Versuchen findet erfindungsgemäß vorteilhaft eine Kraftmessung der Kalibrierkraft statt.

Die erste Kalibrierkontur und die mindestens eine zweite oder weitere Kalibrierkonturen sind zweckmäßigerweise an einem gemeinsamen Werkzeugträger angeordnet. Der Werkzeugträger hat beispielsweise eine stabförmige Gestalt. Der Werkzeugträger erstreckt sich zweckmäßigerweise entlang der Kalibrierungsbahn. Eine Mittelachse des Werkzeugträgers ist zweckmäßigerweise identisch mit der Kalibrierungsbahn.

Bei einer Ausführungsform der Erfindung ist vorgesehen, dass die erste Kalibrierkontur und die mindestens eine zweite Kalibrierkontur an separaten Werkzeugträgern angeordnet sind. Die Kalibriervorrichtung ist vorteilhaft in der Lage, in Abhängigkeit von der jeweiligen Kalibrierkraft, die bei Nutzung eines jeweiligen Werkzeugträgers mit der ersten Kalibrierkontur oder der mindestens einen zweiten Kalibrierkontur auftritt, den ersten Werkzeugträger und somit die erste Kalibrierkontur oder den zweiten Werkzeugträger und somit die zweite Kalibrierkontur in Eingriff mit der Lageröffnung zu bringen.

Die Positioniereinrichtung ist zweckmäßigerweise zu einem Vorschieben der ersten Kalibrierkontur und der mindestens einen zweiten Kalibrierkontur in die Lageröffnung von derselben Seite her oder von einander entgegengesetzten Seiten her ausgestaltet.

Beispielsweise sind die erste Kalibrierkontur und die mindestens eine zweite Kalibrierkontur an ein und demselben Werkzeugträger angeordnet, der von der Positioniereinrichtung in die Lageröffnung hineinbewegbar ist. Es ist auch möglich, dass zwei Werkzeugträger vorgesehen sind, an denen jeweils eine der Kalibrierkonturen angeordnet ist, sodass die beiden Werkzeugträger von einander entgegengesetzten Seiten her in die Lageröffnung hineinbewegbar sind. Zwei derartige Werkzeugträger können aber auch nebeneinander angeordnet sein, beispielsweise jeweils oberhalb eines Werkzeughalters für das Werkstück, so dass die Positioniereinrichtung beispielsweise durch eine Querbewegung quer zu der Kalibrierungsbahn den jeweils geeigneten Werkzeugträger oberhalb der Lageröffnung positioniert und anschließend durch die Vorschubbewegung in die Lageröffnung hinein bewegt. Die beiden Werkzeugträger können auch einen einem Werkzeugwechsler, der einen Bestandteil der Kalibriervorrichtung bilden kann, bereitgestellt sein.

Es ist möglich, dass an dem Werkzeugträger mehrere Kalibrierkonturen in einem Längsabstand angeordnet sind. Beispielsweise können die Kalibrierkonturen vom freien Endbereich des Werkzeugträgers her, der in Eingriff mit der Lageröffnung des Werkstücks gebracht wird, zunehmende Querschnittsflächen oder an ihrem Außenumfang zunehmende Durchmesser aufweisen. Es kann beispielsweise eine Struktur in der Art eines Baumkuchens gebildet sein. Wenn die Kalibrierkonturen mit zunehmendem Durchmesser oder immer größer werdenden Querschnitt bezüglich der Kalibrierungsbahn in die Lageröffnung hinein bewegt werden, nimmt die Kalibrierkraft kontinuierlich zu. Es ist zum Beispiel möglich, dass die Steuerungseinrichtung dann, wenn ein vorbestimmter Schwellenwert der Kalibrierkraft erreicht ist, die Vorschubbewegung beendet, weil dann Kalibrierkonturen mit ausreichendem Querschnitt in Eingriff mit der Lageröffnung gebracht worden sind.

In diesem oder auch in anderen Zusammenhängen ist es vorteilhaft, wenn die Kalibriervorrichtung eine Wegmesseinrichtung zur Messung einer Weglänge der Vorschubbewegung aufweist. Somit kann die Kalibriervorrichtung oder Steuerungseinrichtung derselben beispielsweise die Vorschubbewegung beenden, wenn zumindest eine Kalibrierkontur durch eine vollständige Längslänge der Lageröffnung hindurch bewegt worden ist.

Die Wegmessung kann von der Steuerungseinrichtung auch dazu genutzt werden, die jeweilige Kalibrierkraft in ein Verhältnis zu dem bereits zurückgelegten Kalibrierweg zu setzen. So kann beispielsweise die Kalibrierkraft im Verlauf der Kalibrierung bzw. in Abhängigkeit von dem bereits kalibrierten Abschnitt der Lageröffnung ansteigen oder abfallen. Wenn die Steuerungseinrichtung sozusagen weiß, wo das jeweilige Kalibrierwerkzeug und die Kalibrierkontur ist, kann sie vorteilhaft in Abhängigkeit davon ermitteln, ob der jeweilige Wert der Kalibrierkraft im Rahmen eines vorbestimmten Korridors, beispielsweise zwischen vorbestimmten Schwellenwerten liegt.

Wie schon erwähnt, ist es vorteilhaft, wenn die erste Kalibrierkontur und die mindestens eine zweite Kalibrierkontur bezüglich der Kalibrierungsbahn einen Längsabstand aufweisen. Dieser Längsabstand kann zum Beispiel dadurch gegeben sein, dass die beiden Kalibrierkonturen aneinander entgegengesetzten Seiten des Werkstücks angeordnet sind. Weiterhin ist es möglich, dass die Kalibrierkonturen an einem gemeinsamen Werkzeugträger angeordnet sind, wobei sie am Werkzeugträger in Bezug auf die Kalibrierungsbahn einen Längsabstand aufweisen.

Die erste Kalibrierkontur und die mindestens eine zweite Kalibrierkontur können an ein und demselben Kalibrierwerkzeug vorgesehen sein oder dessen Bestandteile bilden. Es ist aber auch möglich, dass die erste Kalibrierkontur und die mindestens eine zweite Kalibrierkontur an voneinander separaten Kalibrierwerkzeugen vorgesehen sind oder deren Bestandteile bilden.

Bevorzugt ist es, wenn die erste Kalibrierkontur oder die mindestens eine zweite Kalibrierkontur oder beide jeweils einen Bestandteil eines Kalibrierwerkzeugs mit mindestens einer weiteren Kalibrierkontur bilden. Die Kalibrierwerkzeuge sind voneinander separat. Beispielsweise kann ein jeweiliges Kalibrierwerkzeug mehrere, zum Beispiel mindestens zwei, in Bezug auf die Kalibrierungsbahn aneinandergereihte Kalibrierkonturen aufweisen. Diese Kalibrierkonturen können sich beispielsweise in Bezug auf ihre Außengeometrie, ihren Außenumfang oder dergleichen unterscheiden. Zweckmäßig ist eine Ausgestaltung, bei der ein jeweiliges Kalibrierwerkzeug, dass die erste Kalibrierkontur oder die zweite Kalibrierkontur aufweist, in Bezug auf die Kalibrierungsbahn mehrere Kalibrierkonturen aufweist, deren Außenumfang zunimmt, zum Beispiel stufig.

Beispielsweise ist es möglich, dass eine Kalibrierkontur wie später noch erläutert wird dazu dient, eine Beschädigung einer Ölnut oder einer sonstigen Vertiefung an der Lagerinnenkontur zu vermeiden. Dazu hat die Kalibrierkontur beispielsweise in Bezug auf die Kalibrierungsbahn eine andere Schrägneigung als die Vertiefung der Lagerinnenkontur. Weiterhin ist es möglich, dass eine Kalibrierkontur dazu dient, als Stützkontur beispielsweise beim Eindringen des Kalibrierwerkzeugs in die Lageröffnung zu dienen, d.h. also an sich selbst nicht zu kalibrieren, jedoch als eine Art Nebenkalibrierkontur eine tatsächlich kalibrierende Haupt-Kalibrierkontur zu stützen.

Bevorzugt ist es, wenn die Kalibriervorrichtung eine Werkzeugwechseleinrichtung zum Auswechseln des Kalibrierwerkzeugs oder eines das Kalibrierwerkzeug tragenden Werkzeugträgers aufweist. Es ist auch möglich, dass die Positioniereinrichtung zum Auswechseln des Kalibrierwerkzeugs oder eines des Kalibrierwerkzeug tragenden Werkzeugträgers ausgestaltet ist. Die Steuerungseinrichtung ist zweckmäßigerweise zur Ansteuerung der Werkzeugwechseleinrichtung und/oder der Positioniereinrichtung zu einem Werkzeugwechsel in Abhängigkeit von der Kalibrierkraft ausgestaltet. Es ist möglich, dass die Positioniereinrichtung das Kalibrierwerkzeug selbständig aus einem Werkzeugmagazin holt.

So ist es beispielsweise möglich, dass die Steuerungseinrichtung die Kalibriervorrichtung, zum Beispiel die Positioniereinrichtung, zu einem Werkzeugwechsel ansteuert, wenn bei einer Kalibrierung die Kalibrierkraft oberhalb eines Schwellenwerts oder unterhalb eines Schwellenwerts war. So kann beispielsweise ein Kalibrierwerkzeug eingewechselt werden, das im Anschluss daran eine verbesserte Kalibrierung ermöglicht. Durch eine entsprechende Messung der Kalibrierkraft kann die Kalibriervorrichtung dann ermitteln, ob das eingewechselte Kalibrierwerkzeug besser geeignet ist. Ohne weiteres ist es möglich, dass bei dieser Messung dann ermittelt wird, dass die Kalibrierkraft nicht im vordefinierten Rahmen ist, worauf die Steuerungseinrichtung der Werkzeugwechseleinrichtung und/oder der Positioniereinrichtung zum Einwechseln eines weiteren, dritten Kalibrierwerkzeugs ansteuert.

Die Kalibrierungsbahn ist z.B. eine lineare oder gekrümmte Vorschubachse, in der das Kalibrierwerkzeug und das Werkstück relativ zueinander bewegt werden, z.B. das Kalibrierwerkzeug bezüglich des Werkstücks oder umgekehrt das Werkstück bezüglich des Kalibrierwerkzeugs oder beides. Die Kalibrierungsbahn verläuft in der Regel geradlinig, verläuft also entlang einer Kalibrierungsachse oder bildet eine Kalibrierungsachse.

Die Lageröffnung dient beispielsweise als Lageraufnahme für ein Drehlager und/oder für ein Schiebelager, z.B. einer Kurbelwelle.

Die Lageröffnung ist vorteilhaft an einer Lagerbuchse vorgesehen, die in einer Lageraufnahme eines Grundkörpers des Werkstücks, insbesondere eines Motorbauteils, aufgenommen ist. Ein bevorzugtes Anwendungsgebiet der Erfindung sind Motorbauteile, z.B. Pleuel, Motorgehäuse oder dergleichen.

Zweckmäßigerweise hat die zu kalibrierende Lageröffnung bezüglich der Kalibrierungsbahn bzw. ihrer Längserstreckungsrichtung einen gleichen Durchmesser oder eine gleiche Innenkontur, ist also zylindrisch. Bevorzugt ist das Kalibrierwerkzeug an seinem Außenumfang kreisrund, d.h. zur Kalibrierung einer Lageröffnung mit einem kreisrunden Innenumfang vorgesehen. Es kann selbstverständlich auch eine andere als eine kreisrunde Außenkontur der Kalibrierkontur und/oder der Nebenkalibrierkontur vorgesehen sein, z.B. wenn ein Schiebelager zu kalibrieren ist.

Bevorzugt hat die Kalibriervorrichtung mindestens einen Werkzeugträger zum Tragen des Kalibrierwerkzeugs, wobei das Kalibrierwerkzeug zweckmäßigerweise lösbar an dem Werkzeugträger angeordnet ist. Es ist aber auch möglich, dass das Kalibrierwerkzeug fest am Werkzeugträger angeordnet ist. Das lösbare Kalibrierwerkzeug kann bei Verschleiß ausgetauscht werden. Auch eine Anpassung an andere Lagerkonturen ist ohne weiteres möglich. Der Werkzeugträger ist beispielsweise stangenartig und/oder weist einen Dorn auf.

An dem Werkzeugträger können beispielsweise zwei oder weitere Kalibrierwerkzeuge angeordnet sein. Somit kann also bezüglich der Kalibrierungsbahn die Kalibrierung durch zwei oder weitere Kalibrierwerkzeuge durchgeführt werden. Beispielsweise sind zwei erste Kalibrierwerkzeuge hintereinander an dem Werkzeugträger angeordnet, so dass sie nacheinander bei einer Linearbewegung des Werkzeugträgers in die Lageröffnung hinein oder durch diese hindurch in Eingriff mit der Lageröffnung gelangen und diese kalibrieren.

Die Positioniereinrichtung umfasst beispielsweise eine Werkzeug-Positioniereinrichtung, die mindestens ein Kalibrierwerkzeug, beispielsweise ein die erste Kalibrierkontur aufweisendes erstes Kalibrierwerkzeug und oder ein die zweite Kalibrierkontur aufweisendes zweites Kalibrierwerkzeug oder beide Kalibrierwerkzeuge, relativ zu dem Werkstück positioniert. Die Werkzeug-Positioniereinrichtung umfasst beispielsweise einen oder mehrere Linearantriebe, um ein jeweiliges Kalibrierwerkzeug in die Lageröffnung hinein zu verstellen und daraus wieder heraus.

Es ist aber auch eine Werkstück-Positioniereinrichtung zweckmäßig, die das Werkstück relativ zu dem ersten oder dem zweiten Kalibrierwerkzeug verstellt. Beispielsweise ist dann das jeweilige erste oder zweite Kalibrierwerkzeug ortsfest, während die Werkstücke-Positioniereinrichtung das Werkstück zum Kalibrierwerkzeug bewegt. Kombinationen sind ebenfalls möglich, das heißt dass beispielsweise eines der beiden Kalibrierwerkzeuge, zum Beispiel das erste Kalibrierwerkzeug, ortsfest ist, d.h. dass die Werkstück-Positioniereinrichtung das Werkstück zu diesem ersten Kalibrierwerkzeug für den Kalibriervorgang hinbewegt und anschließend wieder davon weg. Im zweiten Schritt führt dann eine Werkzeug-Positioniereinrichtung das zweite Kalibrierwerkzeug in die Lageröffnung hinein.

Das erste Kalibrierwerkzeug und das zweite Kalibrierwerkzeug sind beispielsweise konturgleich oder baugleich. Es ist aber auch möglich, dass das erste und das zweite Kalibrierwerkzeug voneinander verschieden sind, beispielsweise verschiedene Konturen aufweisen.

Es kommen unterschiedliche Kalibrierkonturen infrage, das heißt dass beispielsweise eine Kalibrierkontur schraubenförmig ist, während eine andere Kalibrierkontur, zum Beispiel die zweite Kalibrierkontur, eine kugelsegmentartige Außenoberfläche hat. Die Kalibrierkontur eines Kalibrierwerkzeugs kann aber auch kreiszylindrisch sein, eine Facettierung aufweisen oder verrundete Eckbereiche haben. Vorteilhaft ist es, wenn die jeweiligen Endbereiche einer schraubenförmigen oder zylindrischen Kalibrierkontur ausgerundet sind. Es sind mehrstufige Kalibrierwerkzeuge möglich, die beispielsweise durch eine Aufreihung mehrerer einzelner Kalibrier-Scheiben mit gleichen oder unterschiedlichen Durchmessern auf einem Dorn oder einem sonstigen Werkzeugträger gebildet sind. Als Kalibrierwerkzeug ist aber auch eine ganz einfache Kugel ohne weiteres möglich.

Es ist möglich, dass ein Kalibrierwerkzeug wie erwähnt mehrere Kalibrierkonturen umfasst. Die Kalibrierkonturen haben in Bezug auf die Kalibrierungsbahn zweckmäßigerweise einen Längsabstand. Die Kalibrierkonturen kommen bei der Bewegung des Kalibrierwerkzeugs entlang der Kalibrierungsbahn in Eingriff mit der Lageröffnung. Die Kalibrierkonturen eines ersten Kalibrierwerkzeugs und eines zweiten Kalibrierwerkzeugs können gleiche oder unterschiedliche Außendurchmesser aufweisen, insbesondere gleiche oder unterschiedliche Maximal-Außendurchmesser. Mithin kann also beispielsweise das erste Kalibrierwerkzeug in Bezug auf sämtliche Kalibrierkonturen einen kleineren Außendurchmesser aufweisen als das zweite Kalibrierwerkzeug oder umgekehrt. Es ist z.B. vorteilhaft, wenn die mindestens eine oder alle Kalibrierkonturen eines ersten Kalibrierwerkzeugs einen kleineren Außendurchmesser aufweisen, als das die mindestens eine oder alle danach auf die Lageröffnung einwirkenden Kalibrierkonturen des zweiten Kalibrierwerkzeugs.

Ein Kalibrierwerkzeug, also beispielsweise das erste Kalibrierwerkzeug und/oder das zweite Kalibrierwerkzeug, kann bei dem Kalibriervorgang die Lageröffnung vollständig durchdringen.

Es ist möglich, dass eines oder mehrere der Kalibrierwerkzeuge nur teilweise in die Lageröffnung eindringen, also beispielsweise nicht bis zum gegenüberliegenden freien Ende der Lageröffnung gelangen.

An dieser Stelle sei bemerkt, dass es vorteilhaft ist, wenn dennoch eine Abstützung des Werkzeugträgers an seinem freien Ende vorgesehen ist, auch wenn dies nicht zwingend notwendig ist, jedoch die Kalibriergenauigkeit noch weiter verbessert.

Der Werkzeugträger und/oder das Kalibrierwerkzeug haben zweckmäßigerweise einen Schmiermittelkanal. Der Schmiermittelkanal oder die Schmiermittelkanäle münden zweckmäßigerweise im Bereich des Kalibrierwerkzeugs aus dem Werkzeugträger aus. Das Kalibrierwerkzeug hat vorzugsweise mindestens eine Austrittsöffnung für das Schmiermittel.

Weiterhin ist es zweckmäßig, wenn eine Schmiereinrichtung, insbesondere eine Minimalmengen-Schmiereinrichtung, vorgesehen ist.

Die Kalibriervorrichtung dient vorzugsweise dazu, eine Lageröffnung zu kalibrieren, deren freie Enden, z.B. zu Stirnseiten des Werkstücks oder einer Lagerbuchse hin, bezüglich der Kalibrierungsbahn in einer oder mehreren schräg verlaufenden Ebenen liegen. Ein Anwendungsgebiet ist die Kalibrierung sogenannter Korbhenkel-Pleuel oder sonstiger Pleuel, deren Lagerbuchsen mindestens eine schräge Stirnseite haben.

Eine Möglichkeit dazu ist beispielsweise, das Kalibrierwerkzeug im Bereich vor und/oder nach der Lager-Innenkontur abzustützen, z.B. das Kalibrierwerkzeug und/oder den dieses tragenden Werkzeugträger, beispielsweise ein sogenannter Kalibrierdorn, durch eine stützendes Bett oder durch eine Führung zu führen. Das Kalibrierwerkzeug oder der Werkzeugträger werden beispielsweise durch eine Führungshülse geführt.

Das Kalibrierwerkzeug weist zweckmäßigerweise mindestens zwei bezüglich der Kalibrierungsbahn hintereinander angeordnete Ringe auf, die jeweils die mindestens eine Kalibrierkontur aufweisen. Somit können also bezüglich der Kalibrierungsbahn nacheinander zwei Ringe die Lager-Innenkontur kalibrieren. Das Ergebnis ist dadurch besser.

Es ist auch möglich, dass mehrere Kalibrierkonturen bezüglich der Kalibrierungsbahn hintereinander angeordnet sind, die stufig zueinander sind. So ist es beispielsweise möglich, dass in Vorschubrichtung zunächst eine erste, einen kleineren Außenumfang aufweisende Kalibrierkontur in Eingriff mit der Lager-Innenkontur kommt und dann eine zweite Kalibierkontur mit einem größeren Außenumfang.

Das Kalibrierwerkzeug weist zweckmäßigerweise einen Kalibrierring auf, um dessen Außenumfang sich die mindestens eine Kalibrierkontur ringförmig erstreckt. Vor und/oder hinter dem Kalibrierring ist ein Nebenkalibrierkörper vorgesehen, an dem die mindestens eine Nebenkalibrierkontur vorgesehen ist, wobei sich diese Nebenkalibrierkontur nur teilringförmig über einen Teilumfang des Nebenkalibrierkörpers erstreckt. Der Nebenkalibrierkörper ist also beispielsweise teilringförmig.

Die ringförmige Kalibrierkontur und die teilringförmige Nebenkalibrierkontur sind vorzugsweise parallel zueinander, beispielsweise beide rechtwinkelig zur Kalibrierungsbahn. Sie können aber auch schräg zur Kalibrierungsbahn verlaufen.

Die mindestens eine Nebenkalibrierkontur kann beispielsweise schräg zur Kalibrierungsbahn verlaufen. Es ist aber auch möglich, dass die Nebenkalibrierkontur rechtwinkelig quer zur Kalibrierungsbahn verläuft.

Eine bevorzugte Ausführungsform sieht vor, dass das Kalibrierwerkzeug bezüglich der Kalibrierungsbahn mindestens drei hintereinander angeordnete Ringe aufweist. Zwei Ringe sind beispielsweise als die mindestens eine Nebenkalibrierkontur aufweisende Nebenkalibrierringe ausgestaltet. Zwei Ringe können aber auch als die mindestens eine Kalibrierkontur aufweisende Kalibrierringe ausgestaltet sein. Eine Kombination ist möglich, z.B. mindestens zwei Nebenkalibrierringe und mindestens zwei Kalibrierringe.

Die Kalibriervorrichtung bildet vorzugsweise einen Bestandteil einer Werkzeugmaschine oder ist als eine Werkzeugmaschine ausgestaltet. Auch die Einbindung in ein mehrere Stationen umfassendes Bearbeitungszentrum zur Bearbeitung von Motorbauteilen, beispielsweise zur Pleuel-Bearbeitung, kann die erfindungsgemäße Kalibriervorrichtung aufweisen bzw. die Kalibriervorrichtung kann einen Bestandteil eines solchen Bearbeitungszentrums bilden. Die Werkzeugmaschine oder das Bearbeitungszentrum haben z.B. Mittel zum Einpressen einer Lagerbuchse in das Werkstück und/oder zur Herstellung, z.B. zum Bohren, der Lageröffnung. Das Bearbeitungszentrum weist beispielsweise zusätzliche Stationen zum Cracken, Fügen, Verschrauben und dergleichen weiteren Bearbeitung des Werkstücks auf.

Die Kalibriervorrichtung kann auch eine individuelle Baueinheit bilden oder eine Kalibrierstation darstellen, muss also nicht unbedingt in eine Werkzeugmaschine integriert sein oder einen Bestandteil eines Bearbeitungszentrums bilden.

Nachfolgend werden Ausführungsbeispiele der Erfindung anhand der Zeichnung erläutert. Es zeigen:
- Figur 1: eine Seitenansicht einer ersten Ausführungsform einer Kalibriervorrichtung mit einem ersten Kalibrierwerkzeug noch vor Eintritt in die Lageröffnung eines Werkstücks,
- Figur 2: ein Detail A aus Figur 1, wobei jedoch das Kalibrierwerkzeug die Lageröffnung bereits durchdrungen hat,
- Figur 3: eine Seitenansicht der Kalibriervorrichtung gemäß Figuren 1, 2 bei der Kalibrierung mit einem zweiten Kalibrierwerkzeug,
- Figur 4: eine perspektivische Detailansicht des Kalibrierwerkzeugs der Kalibriervorrichtung gemäß Figur 1,
- Figur 5: die Kalibriervorrichtung gemäß Figuren 1-3, jedoch mit anderen Kalibrierwerkzeugen, von denen erste Kalibrierwerkzeuge in Eingriff mit der Lageröffnung des Werkstücks gezeigt sind,
- Figur 6: die Kalibriervorrichtung gemäß Figur 5, jedoch mit den zweiten Kalibrierwerkzeugen in Eingriff mit der Lageröffnung,
- Figur 7: eine perspektivische Schrägansicht eines der Kalibrierwerkzeuge der Kalibriervorrichtung gemäß Figuren 5, 6.

In der Zeichnung sind Kalibriervorrichtungen 10, 110 zum Kalibrieren von Werkstücken 70 dargestellt, die teilweise gleiche oder ähnliche Komponenten haben, die dann mit denselben Bezugsziffern versehen sind, gegebenenfalls mit einer Differenz von 100.

Bei den Werkstücken 70 handelt es sich um Motorbauteile 71, ganz konkret Pleuel 72. Die Pleuel 72 weisen einen Pleuelschaft 73 sowie zwei Lageröffnungen, nämlich ein so genanntes großes Auge 74 und ein kleines Auge 75 auf. Die Kalibriervorrichtungen 10 und 110 dienen zur Bearbeitung der Lageröffnung, die am kleinen Auge 75 vorgesehen ist. In eine Lageraufnahme 77 eines Grundkörpers 76 des Werkstücks 70, die am kleinen Auge 75 vorgesehen ist, ist in einem vorherigen Arbeitsschritt beispielsweise eine Lagerbuchse 80, mithin also ein Ringkörper, eingepresst worden.

Die Lagerbuchse 80 hat eine obere Stirnseite 82 sowie eine untere Stirnseite 83. Ein Innenumfang der Lagerbuchse 80 bildet eine Lageröffnung 85 und hat eine Lager-Innenkontur 84, die es zu kalibrieren gilt. Nach dem Einpressen der Lagerbuchse 80 ist nämlich die Lager-Innenkontur 84 noch nicht im gewünschten Umfang maßgenau. Ferner ist es vorteilhaft, wenn die Lagerbuchse 80 von der Lageröffnung 85 her nach radial außen in den Innenraum des kleinen Auges 75 gepresst wird, so dass sich dort die einander gegenüberliegenden Flächen des Pleuels 72 und der Lagerbuchse 80 optimal miteinander verbinden, quasi miteinander verzahnen.

Dazu sind Kalibrierwerkzeuge 50 und 150 vorgesehen, die nachfolgend zur Unterscheidung ihrer Einwirkrichtung auf das Werkstück 70 als Kalibrierwerkzeuge 50a, 50b oder 150a, 150b bezeichnet werden. Die Kalibrierwerkzeuge 50a, 150a der Kalibriervorrichtungen 10, 110 sind an einem Werkzeugträger 20a angeordnet, die Kalibrierwerkzeuge 50b, 150b der Kalibriervorrichtungen 10, 110 sind an einem Werkzeugträger 20b angeordnet.

Es wäre ohne weiteres denkbar, dass nur einer der Werkzeugträger 20a oder 20b vorgesehen ist, was später noch deutlich wird. Eine Bearbeitung oder Kalibrierung von einander entgegengesetzten Seiten her ist nämlich eine Option und nicht in jedem Fall notwendig.

Die Werkzeugträger 20a, 20b umfassen Tragstäbe oder Dorne 22a, 22b, an deren freien, von der Werkzeug-Positioniereinrichtung 21 entfernten Endbereichen, den freien Enden 25, Werkzeugaufnahmen 23 vorgesehen sind.

Das Werkstück 70 wird von einem Werkstückhalter 40 gehalten.

Die Kalibrierwerkzeuge 50a, 50b oder 150a, 150b und das Werkstück 70, insbesondere der Werkstückhalter 40, sind anhand einer Positioniereinrichtung 15 relativ zueinander positionierbar, um die Lager-Innenkontur 84 zu kalibrieren.

Die Werkzeugträger 20a, 20b sind durch eine Werkzeug-Positioniereinrichtung 21 der Positioniereinrichtung 15 positionierbar, nämlich Antriebe 33a, 33b, die einen oder mehrere Linearantriebe und/oder Drehantriebe aufweisen können. Ein Halteabschnitt 24, beispielsweise ein Schaft, eines Werkzeugträgers 20a, 20b ist in einer Werkzeugträger-Aufnahme 27 eines jeweiligen Antriebs 33a, 33b der Werkzeug-Positioniereinrichtung 21 aufgenommen.

Die Werkzeug-Positioniereinrichtung 21 kann die Dorne oder Tragstäbe 22a, 22b entlang der Kalibrierungsbahn 28 in einer Vorschubbewegung 29a, 29b zu dem Werkstückhalter 40 linear vor und zurück bewegen. Der Vorschubbewegung 29a, 29b kann eine Drehbewegung 30 überlagert sein oder die Vorschubbewegung 29a, 29b und die Drehbewegung 30 finden sequentiell statt.

Die Positioniereinrichtung 15 kann auch eine Werkstück-Positioniereinrichtung 41 umfassen, um den Werkstückhalter 40 und somit das dort daran gehaltene Werkstück 70 bzw. das Pleuel 72 relativ zu einem oder beiden Werkzeugträgern 20a, 20b der Kalibriervorrichtung 10, 110 zu positionieren. Beispielsweise umfasst die Werkstück-Positioniereinrichtung 41 einen oder mehrere Antriebe 43, z.B. Linearantriebe und/oder Drehantriebe oder dergleichen, zum Verstellen oder Antreiben des Werkstückhalters 40 zu einem oder beiden der beiden Werkzeugträger 20a, 20b hin oder davon weg. Auch beim Werkstückhalter 40 bzw. der Werkstück-Positioniereinrichtung 41 sind eine lineare Bewegung, entsprechend der Vorschubbewegungen 29a und/oder 29b, und/oder eine Drehbewegung, entsprechend der Drehbewegung 30, möglich. Die Drehbewegung und die lineare Bewegung sind sequentiell oder einander überlagert möglich.

Es ist möglich, dass Werkstück-Positioniereinrichtung 41 z.B. nur eine der Drehbewegung 30 entsprechende Drehbewegung leistet, die Werkzeug-Positioniereinrichtung 21 nur die Vorschubbewegungen 29a, 29b.

Die Werkzeugträger 20a, 20b dienen zum Tragen der Kalibrierwerkzeuge 50a, 50b der Kalibriervorrichtung 10 oder der Kalibrierwerkzeuge 150a, 150b der Kalibriervorrichtung 110. Beispielsweise durchdringt der Werkzeugträger 20a, 20b mit seinem freien Ende 25 zunächst die Lageröffnung 85 und führt dabei das Kalibrierwerkzeug 50a, 50b, 150a, 150b durch die Lageröffnung 85 hindurch, so dass die Lager-Innenkontur 84 kalibriert wird. Dabei durchdringt das freie Ende 25 beispielsweise eine Öffnung 42 am Werkstückhalter 40.

Unterhalb der Öffnung 42 kann optional eine Stütze oder Führung 26 vorgesehen sein, auf der sich der Werkzeugträger 20a mit seinem freien Ende 25 unterseitig abstützt oder an der der Werkzeugträger 20a unterhalb des Werkstückhalters 40 geführt ist. Dadurch ist die Vorschubbewegung 29a nicht nur durch die Werkzeug-Positioniereinrichtung 21, d.h. im Bereich des Halteabschnitts 24 geführt, sondern auch im Bereich des freien Endes 25. Wenn der Werkzeugträger 20b jedoch in die Lageröffnung 85 einfährt, ist die Führung 26 entfernt. Dann kann optional oberhalb der Lageröffnung 85 eine der Führung 26 baulich entsprechende Führung angeordnet sein (nicht dargestellt).

Zur weiteren Verbesserung der Kalibrierung dient auch beispielsweise eine Schmiervorrichtung 35, vorteilhaft eine Minimalmengenschmiervorrichtung, die über einen Kanal 36, der im Werkzeugträger 20a verläuft, Schmiermittel oder Kühlmittel zum Kalibrierwerkzeug 50a und/oder 50b oder 150a und/oder 150b fördert, welches an einer Austrittsöffnung 37 des Kalibrierwerkzeugs 50a, 50b oder 150a, 150b ausmündet. Selbstverständlich kann der Kanal 36 auch oberhalb oder unterhalb des Kalibrierwerkzeugs 50a, 50b oder 150a, 150b ausmünden, so dass dennoch das Schmiermittel in den Bereich des Kalibrierwerkzeugs 50a, 50b oder 150a, 150b während des Kalibrierens oder im Zusammenhang mit dem Kalibrieren gelangt.

Eine weitere Schwierigkeit bei dem Kalibrieren ergibt sich beispielsweise dadurch, dass die obere und die untere Stirnseite 82 und 83 der Lagerbuchse 80 quer zur Kalibrierungsbahn 28 jeweils einen Schrägverlauf bzw. eine gekrümmte Kontur haben.

Das Konzept der Kalibrierwerkzeuge 50a oder 150a eignet sich dazu, trotz der schräg verlaufenden oberen und unteren Stirnseiten 82 und 83 der Lagerbuchse 80 eine optimale Kalibrierung zu leisten. Die Stütze und/oder Führung 26 ist zwar auch in diesem Fall vorteilhaft, jedoch nicht notwendig.

Die Kalibrierwerkzeuge 50a und 50b sowie die Kalibrierwerkzeuge 150a, 150b sind jeweils baugleich. Nachfolgend werden vereinfacht die Kalibrierwerkzeuge 50a, 150a erläutert.

Die Kalibrierwerkzeuge 50a, 150a weisen Werkzeugkörper 51, 151 auf, an denen zum einen Kalibrierkonturen 52 und 152, zum andern Nebenkalibrierkonturen 53 und 54 bzw. 153 und 154 vorgesehen sind. Die Kalibrierkonturen 52, 152 dienen zum Kalibrieren der Lage-Innenkontur 84, d.h. zur Einstellung eines exakten Maßes der Lageröffnung 85.

Die Kalibrierwerkzeuge 50a und 150a weisen beispielsweise Kalibrierringe 55, 155 sowie Nebenkalibrierkörper 56, 57, 156, 157 auf. Die Nebenkalibrierkörper 56 und 57 sind als Nebenkalibrierringe 58 und 59 ausgestaltet, während die Nebenkalibrierkörper 156 und 157 sozusagen Teilringkörper 158, 159 darstellen. Die Kalibrierwerkzeuge 50a und 150a können also aus einzelnen Ringen aufgebaut sein, aber auch einstückig sein, das heißt einen durchgehenden Werkzeugkörper 51 bzw. 151 aufweisen, an dem dann die Kalibrierkonturen 52, 152 sowie die Nebenkalibrierkonturen 53, 54 bzw. 153, 154 vorgesehen sind.

Das Kalibrierwerkzeug 50a, 50b hat zwei bezüglich der Vorschubbewegung 29a, 29b nacheilende Kalibrierkonturen 52 bzw. zwei Kalibrierringe 55. Bezüglich der Kalibrierungsbahn 28 bzw. der Vorschubbewegung 29a, 29b vorauseilend sind neben dem einen der Kalibrierringe 55 Nebenkalibrierringe 58 und 59 angeordnet. Der Außenumfang der Nebenkalibrierringe 58 und 59 ist kleiner als derjenige der Kalibrierringe 55. Beispielsweise haben die Nebenkalibrierringe 58 und 59 und der sich daran anschließende Kalibrierring 55 stufig ansteigende Außendurchmesser, die beispielsweise um jeweils etwa 0,02-0,03 mm ansteigend sind, zum Beispiel bei einem Gesamt-Durchmesser von etwa 18-19 mm. Die beiden Kalibrierringe 55 haben vorzugsweise denselben Außendurchmesser, wirken also in gleichem Maße kalibrierend.

Es ist aber alternativ auch möglich, dass z.B. der obere Kalibrierring 55 einen größeren oder kleineren Außendurchmesser als der untere Kalibrierring 55 hat.

Das Kalibrierwerkzeug 150a hingegen hat nur einen, sozusagen zentralen Kalibrierring 155, dem in Bezug auf die Vorschubbewegung 29a, 29b ein Teilringkörper 158 vorgelagert ist, also die teilringförmige Nebenkalibrierkontur 153, und in Bezug auf die Vorschubbewegung 29a, 29b nacheilend die ebenfalls teilringförmige Nebenkalibrierkontur 154, die am Teilringkörper 159 vorgesehen ist.

Zur lösbaren Befestigung des Kalibrierwerkzeugs 50a, 50b, 150a, 150b am Werkzeugträger 20a dient eine Aufnahme 60, 160, zum Beispiel eine Bohrung. Die Aufnahme 60, 160 ist zur Befestigung an der Werkzeugaufnahme 23 des Werkzeugträgers 20a vorgesehen, zum Beispiel zum Einstecken des freien Endes 25 in die Aufnahmen 60, 160.

Die Kalibrierkonturen 52 und 152 und die Nebenkalibrierkonturen 53, 54 bzw. 153, 154 haben jeweils einen kugelsegmentförmigen Querschnitt. Zwischen den Kalibrierkonturen 52 und 152 und den Nebenkalibrierkonturen 53, 54 bzw. 153, 154 sind jeweils Vertiefungen 61, 161, beispielsweise in der Art von Einschnürungen oder Taillierungen, vorgesehen.

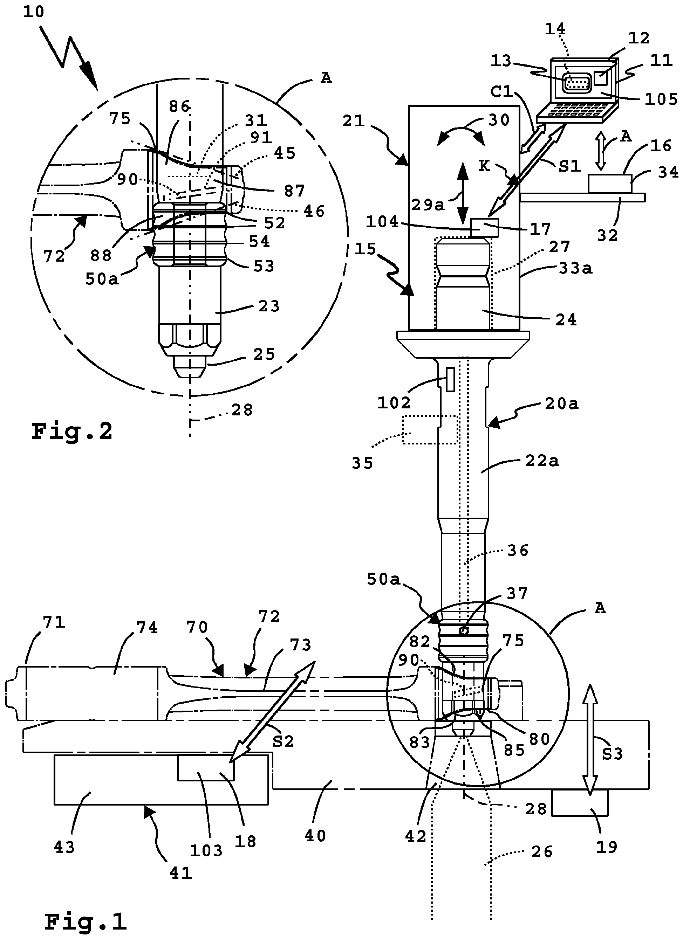

Der Kalibriervorgang mit dem Kalibrierwerkzeug 50a verläuft folgendermaßen. Ausgehend von beispielsweise der Position gemäß Figur 1 wird das Kalibrierwerkzeug 50a, 150a in die Lageröffnung 85 entlang der Kalibrierungsbahn 28 im Rahmen der Vorschubbewegung 29a hinein bzw. durch die Lageröffnung 85 hindurch bewegt, in der Zeichnung also von oben her. Dann wird das Kalibrierwerkzeug 50b, 150b von der entgegengesetzten Seite der Lageröffnung 85 her im Rahmen der Vorschubbewegung 29b hinein bzw. durch die Lageröffnung 85 hindurch bewegt.

Bei der Vorschubbewegung 29a, 29b des Kalibrierwerkzeugs 50a, 50b stützen sich zunächst die beiden Nebenkalibrierkonturen 53 und 54 an der Lager-Innenkontur 84 ab. Die Nebenkalibrierkonturen 53 und 54 können eine Vor-Kalibrierung durchführen, das heißt den Kalibriervorgang einleiten. Allerdings haben die Nebenkalibrierkonturen 53 und 54 einen kleineren Außendurchmesser als die Kalibrierkonturen 52, die nach den Nebenkalibrierkonturen 53 und 54 in Eingriff mit der Lager-Innenkontur 84 gelangen und diese kalibrieren.

Die näher bei den Nebenkalibrierkonturen 53 und 54 befindliche Kalibrierkontur 52 ist bei der Vorschubbewegung 29a, 29b entlang der Kalibrierungsbahn 28 zunächst in kalibrierendem Eingriff mit einem oberen, quer zur Kalibrierungsbahn 28 nur teilringförmigen und somit nicht ringförmig geschlossenen Bereich 86 der Lageröffnung 85, wobei allerdings während dieser Kalibrierung die Nebenkalibrierkonturen 53 und 54 möglicherweise nicht im ausreichenden Maße abstützend wirken. Der Kalibrierring 55 kann also in den dem Bereich 86 gegenüberliegenden offenen (in der Zeichnung rechts) Bereich ausweichen und den Bereich 86 der Lageröffnung 85 noch nicht im gewünschten Maß kalibrieren. Dennoch stützen bereits die Nebenkalibrierringe 58 und 59 das Kalibrierwerkzeug 50a bzw. die in der Zeichnung untere Kalibrierkontur 52 in einer bezüglich der Kalibrierungsbahn 28 schräg verlaufenden Ebene 45, nämlich im mittleren Bereich 87 der Lageröffnung 85, ab.

Es ist exemplarisch nur eine schräge Ebene 45 eingezeichnet. Selbstverständlich sind vorteilhaft weitere derartige schräge Ebenen vorhanden, auch in anderen Winkelstellungen bezüglich der Kalibrierungsbahn 28, weil ja die obere Stirnseite 82 keinen Diagonalverlauf hat, sondern einen gekrümmten Verlauf.

Wenn jedoch der den Nebenkalibrierringen 58, 59 nähere Kalibrierring 55 dann weiter in die Lageröffnung 85 eindringt (in der Zeichnung nach unten) stützt er sich im mittleren, vollständig ringförmigen geschlossenen Bereich 87 der Lageröffnung 85 ab, das heißt er kalibriert diesen Bereich 87 und wirkt gleichzeitig als ein Nebenkalibrierring oder eine Nebenkalibrierkontur für den weiteren (oberen) Kalibrierring 55, der dann den Bereich 86 kalibriert. Die Kalibrierringe 55 stützen sich in der Lageröffnung 85 also bezüglich mindestens einer bzw. mehreren schräg verlaufenden Ebenen 45 sozusagen wechselseitig ab.

Im weiteren Verlauf der Kalibrierung ändern sich dann die Rollen der beiden Kalibrierringe 55. Wenn nämlich der in der Zeichnung untere, näher bei den Nebenkalibrierringen 58, 59 befindliche Kalibrierring 55 in den unteren, ebenfalls nur teilringförmigen Bereich 88 der Lageröffnung 85 gelangt, ist der in der Zeichnung obere Kalibrierring 55 noch im mittleren Bereich 87 der Lageröffnung 85 und stützt sich dort optimal ab. Die Kalibrierringe 55 sind also in einer bezüglich der Kalibrierungsbahn 28 weiteren, zur Ebene 45 gegensinnig schräg geneigten schrägen Ebene 46 in Eingriff bzw. in kalibrierendem Kontakt mit der Lageröffnung 85. Der (in der Zeichnung obere) im Bereich 86 befindliche Kalibrierring 55 ist dann sozusagen ein Nebenkalibrierring oder eine Nebenkalibrierkontur für den (in der Zeichnung unteren) Kalibrierring 55, der in Eingriff mit dem Bereich 87 der Lageröffnung ist bzw. diesen kalibriert.

Selbstverständlich könnten noch weitere Kalibrierringe vorgesehen sein, was dann das Ergebnis verbessert. Im Prinzip ist das bei der Kalibriervorrichtung 110 realisiert, an deren Werkzeugträger 20a neben dem Kalibrierwerkzeug 150a ein weiteres Kalibrierwerkzeug 150a' vorgesehen ist, das vorzugsweise gleichartig ausgestaltet ist. Auch am anderen Werkzeugträger 20b können entsprechend zwei zweite Kalibrierwerkzeuge 150b und 150b' vorgesehen sein. Eine vorteilhafte Ausführungsform sieht dabei vor, dass zunächst die beiden vorderen Kalibrierwerkzeuge 150a und 150b die Lageröffnung 85 von den einander entgegengesetzten Seiten her kalibrieren und dann die weiteren Kalibrierwerkzeuge 150a' und 150b' die Kalibrierung sozusagen verfeinern.

Selbstverständlich könnten auch beispielsweise unterschiedliche Kalibrierwerkzeuge an einem Werkzeugträger 20a vorgesehen sein, zum Beispiel zunächst bezüglich der Vorschubrichtung der Vorschubbewegung 29a, 29b ein Kalibrierwerkzeug 150a und sodann ein weiteres Kalibrierwerkzeug 50a. Die Wirkungsweise der Kalibrierwerkzeuge 50a und 150a ist ähnlich, was nachfolgend deutlich wird.

Wenn bei dem Kalibriervorgang der Kalibriervorrichtung 110, das heißt bei der Vorschubbewegung 29a, 29b in Richtung der Lageröffnung 85 hinein, zunächst die sozusagen vorauseilende Nebenkalibrierkontur 153 bereits im mittleren Bereich 87 der Lageröffnung 85 ist und sich dort abstützt, kann sie bezüglich der schrägen Ebene 45 als eine Abstützung für den sich nunmehr im oberen Bereich 86 der Lageröffnung 85 befindlichen Kalibrierring 155 dienen. Dessen Kalibrierkontur 152 kann dann den Bereich 87 bereits kalibrieren.

Sodann durchläuft der Kalibrierring 155 den mittleren Bereich 87 und anschließend den in der Zeichnung unteren, ebenfalls nur teilweise ringförmigen Bereich 88. Dort kann sich der Kalibrierring 155 nicht mehr sozusagen selbst in der Lageröffnung 85 abstützen, da er unterhalb der unteren schrägen Ebene 46 teilweise sozusagen im Freien ist. Hier wirkt dann die obere Nebenkalibrierkontur 154, die in einem dem Bereich 88 gegenüberliegenden Abschnitt des mittleren Bereichs 86 in Berührkontakt bzw. sich abstützend an der Lageröffnung 85 anliegt.

Die Kalibrierung kann durch das weitere, sich im Rahmen der Vorschubbewegung 29a, 29b durch die Lageröffnung 85 hindurch bewegende Kalibrierwerkzeuge 150' verbessert werden.

Die obigen Kalibrierwerkzeuge 50a-150b eignen sich zwar in besonderer Weise für die Kalibrierung von Lagerhülsen, die jeweils schräge Stirnseiten haben, d.h. dass die Kalibrierung einer Innenwand auf einer Seite bereits beginnt, wo gegenüberliegend noch keine Abstützung des Kalibrierwerkzeugs möglich ist. Die Kalibrierwerkzeuge 50a-150b ermöglichen es, die Lageröffnung 85 von einander entgegengesetzten Seiten her zu bearbeiten, was ein hervorragendes Kalibrierergebnis ergibt.

An der Lager-Innenkontur 84 ist beispielsweise eine Vertiefung 90 angeordnet. Die Vertiefung 90 hat einen Schrägverlauf 91 schräg zur Kalibrierungsbahn 28 und schräg auch zu einer Orthogonalen 31 bezüglich der Kalibrierungsbahn 28. Die Vertiefung 90 bildet beispielsweise eine Ölnut oder ist als Ölnut ausgestaltet. Die Vertiefung 90 ist beispielsweise vor der Kalibrierung bereits an der Lager-Innenkontur 84 vorhanden, so dass an sie die Gefahr besteht, dass beim Kalibrieren der Lageröffnung 85 die Nut oder Vertiefung 90 beschädigt wird oder dazu führt, dass sich das Kalibrierwerkzeug in der Vertiefung 90 verhakt und dann die Lagerbuchse 80 aus der Lageraufnahme 77 herausgeschoben wird. Dagegen sind jedoch Maßnahmen getroffen.

Wenn die orthogonal zur Kalibrierungsbahn 28 verlaufenden Kalibrierkonturen 52 oder 152 an der Vertiefung 90 vorbei bewegt werden, gelangen unterschiedliche Abschnitte der Kalibrierkonturen 52, 152 im Verlauf dieser Vorschubbewegung in Kontakt oder in Eingriff mit der Vertiefung 90. Die Kalibrierkonturen 52, 152 können sich mit der Vertiefung 90 nicht verhaken oder die Vertiefung 90 durch entsprechende massive Krafteinwirkung verformen. Dadurch ist die Gefahr, dass die Lagerbuchse 80 aus der Lageraufnahme 77 sozusagen herausgeschoben oder herausgezogen wird, vermieden.

Die Kalibriervorrichtungen 10 und 110 sind durch eine Steuerungseinrichtung 11 steuerbar. Die Steuerungseinrichtung 11 umfasst beispielsweise einen Prozessor 12 und einen Speicher 13, in welchem eines oder mehrere Programmmodule 14 gespeichert sind. Mit dem mindestens einen Programmmodul 14 sind die Funktionen der Kalibriervorrichtungen 10 und 110 steuerbar und/oder überwachbar. Der Prozessor 12 ist beispielsweise zur Ausführung von Programmbefehlen ausgestaltet, welche die nachfolgende Verfahrensweise steuern und/oder überwachen. Bei der Steuerungseinrichtung 11 kann es sich beispielsweise um eine speicherprogrammierbare Steuerung handeln, einen Computer oder dergleichen. Eingabemittel und Ausgabemittel der Steuerungseinrichtung 11, beispielweise Tastatur, Maus, Monitor, Bedienoberfläche oder dergleichen, sind vorteilhaft vorhanden, werden jedoch nicht im Einzelnen ausgeführt.

Bei den nachfolgenden Ausführungsbeispielen ist Beispiel Weise vorgesehen, dass die Kalibrierwerkzeuge unterschiedlich ausgestaltet sind, d.h. dass sie z.B. unterschiedliche Außenumfänge aufweisen. Z.B. haben die Kalibrierwerkzeuge 50a, 50a' größere Außenumfänge als die Kalibrierwerkzeuge 50b, 50b'. In Bezug auf einen Werkzeugträger 20a oder 20b ist es vorteilhaft, wenn die am freien Längsende befindlichen Kalibrierwerkzeuge 50a und 50b einen kleineren Außenumfang aufweisen als die Kalibrierwerkzeuge 50a' und 50b'.

Die Kalibrierwerkzeuge 50, 150 haben wie erläutert mehrere Kalibrierkonturen. Möglich wäre aber auch eine Konfiguration, bei der ein jeweiliges Kalibrierwerkzeug 50, 150 nur eine Kalibrierkontur aufweist.

Somit kann die Steuerungseinrichtung 11 durch eine Wahl eines geeigneten Kalibrierwerkzeugs unter Berücksichtigung einer jeweiligen Kalibrierkraft K, die bei der Kalibrierung der Lageröffnung 85 jeweils erfasst wird, eine optimale Kalibrierung gewährleisten.

Die Steuerungseinrichtung 11 kommuniziert mit einer Kraftmesseinrichtung 16, die eine oder mehrere der nachfolgend erläuterten speziellen Ausführungsformen aufweisen kann. Die Kraftmesseinrichtung 16 dient zur Erfassung einer Kalibrierkraft K, die beim Kalibrieren der Lageröffnung 85 auftritt und meldet diese an die Steuerungseinrichtung 11. Die Kalibrierkraft K ist beispielsweise eine Normalenkraft quer zu der Kalibrierungsbahn 28 oder eine Kraft, deren Kraftrichtung entlang der Kalibrierungsbahn 28 verläuft.

Beispielsweise umfasst die Kraftmesseinrichtung 16 eine Stützkraftmesseinrichtung 17 zum Erfassen einer Stützkraft S1. Die Stützkraftmesseinrichtung 17 ist beispielsweise an der Werkzeugträger-Aufnahme 27 oder einer sonstigen Schnittstelle zwischen einerseits dem Antrieb 33a, 33b und andererseits dem Werkzeugträger 20a und 20b vorgesehen ist. Wenn also der Antrieb 33a, 33b mit einer vorbestimmten Kraft auf den Werkzeugträger 20a oder 20b einwirkt, um die Kalibrierung vorzunehmen bzw. die Vorschubbewegung 29a und 29b des Kalibrierwerkzeugs 50a, 50b oder 150a, 150b zu leisten, wirkt er mit der Stützkraft S1, die man auch als eine Antriebskraft bezeichnen kann, auf den Werkzeugträger 20a und 20b.

Die Stützkraftmesseinrichtung 17 kann beispielsweise eine kapazitive Messeinrichtung 104 umfassen, die die Kapazität zwischen einerseits dem in die Werkzeugaufnahme 23 eindringenden Abschnitt des Werkzeugträgers 20 und andererseits dem Boden der Werkzeugträger-Aufnahme 27 misst. Beispielsweise sind dort entsprechend kapazitive Flächen vorgesehen.

In ähnlicher Weise kann beispielsweise auch die Antriebskraft ermittelt werden, die vom Werkstück-Antrieb 43 ausgeübt wird, um das Werkstück 70 entlang der Bewegungsbahn 29a oder 29b in Richtung der Kalibrierwerkzeuge 50a, 50b oder 150a, 150b zu verstellen. Beispielsweise ist zwischen dem Werkstückhalter 40 und dem Werkstück-Antrieb 43 eine Stützkraftmesseinrichtung 18 vorgesehen, die die vom Antrieb 43 ausgeübte Stützkraft S2 als Maß oder Äquivalent für die Kalibrierkraft K an die Steuerungseinrichtung 11 meldet.

Ein anderes Maß oder Äquivalent für die Kalibrierkraft K kann beispielsweise auch eine Stützkraft S3 sein, mit der der Werkstückhalter 40 und somit das Werkstück 70 bei der Kalibrierung abzustützen ist. Beispielsweise ist im Bereich des kleinen Auges 73 eine Stützkraftmesseinrichtung 19 vorgesehen, die sozusagen die Widerlagerkraft oder Gegenhaltekraft des Werkstückhalters 40 beim Kalibrieren durch die Kalibrierwerkzeugs 50a oder 150a.

Die Stützkraftmesseinrichtungen 18, 19 können beispielsweise eine Kraftmessdose 103 umfassen oder dadurch gebildet sein.

Alternativ oder ergänzend zur Stützkraftmesseinrichtung 17 kann aber auch beispielsweise ein Dehnungsmessstreifen 102 am Werkzeugträger 20 oder vielleicht sogar unmittelbar an einem der Kalibrierwerkzeuge 50 oder 150 vorgesehen sein, der eine Stauchung oder sonstige beim Kalibrieren auftretende Verformung des Werkzeugträgers 20 oder Kalibrierwerkzeugs 50, 150 misst, die ebenfalls als Maß für die Kalibrierkraft K geeignet ist.

Weiterhin wäre zur Ermittlung der Kalibrierkraft K auch möglich, eine Kraft zwischen einem Kalibrierwerkzeug und dem Werkzeugträger, der das Kalibrierwerkzeug trägt, zu messen. So kann beispielsweise zwischen einem jeweiligen Kalibrierwerkzeug 50, 150 und dem Werkzeugträger 20 eine Kraftmesseinrichtung, zum Beispiel eine kapazitive Kraftmesseinrichtung, ein Dehnungsmessstreifen oder dergleichen, vorgesehen sein.

Alternativ oder ergänzend kann auch eine Strommesseinrichtung 34 beispielsweise den zum Antrieb 33a fließenden Strom erfassen. Dieser Stromfluss oder die Stromstärke kann als Maß oder Äquivalent dafür dienen, mit welcher Antriebskraft A der Antrieb 33a den Werkzeugträger 20a beim Kalibrieren der Lageröffnung 85 antreiben muss. Eine derartige Krafterfassung der Kalibrierkraft K durch Strommessung durch eine nicht dargestellte Strommesseinrichtung ist auch beim Antrieb 33b möglich, bei dem beispielsweise eine Antriebskraft A2 als Maß oder Äquivalent für die Kalibrierkraft K ermittelt wird.

Ohne weiteres ist eine Strommessung aber auch beim Antrieb 43 der Werkstück-Positioniereinrichtung 41 möglich, so dass beispielsweise die Kalibrierkraft in Gestalt einer Antriebskraft A3 beim Antrieb 43 durch eine nicht dargestellte Strommesseinrichtung ermittelt wird.

Wenn die Steuerungseinrichtung 11 direkt zur Bereitstellung des Antriebstromes für einen Antrieb 33 oder 43 ausgestaltet ist, beispielsweise mit einer entsprechenden Endstufe, kennt sie sozusagen selbst den Stromwert und somit die Antriebskraft A.

Die Stützkraft S1, S2, S3 und die Antriebskraft A werden beispielsweise über Meldeleitungen, Funk oder dergleichen, an die Steuerungseinrichtung 11 übertragen.

Es versteht sich, dass nur einer der vorgenannten Werte S1, S2, S3 oder A völlig ausreichend ist. Es ist aber auch möglich, dass die Steuerungseinrichtung 11 mehrere, z.B. mindestens zwei, der vorgenannten Werte für Stützkraft oder Antriebskraft erhält und durch eine entsprechende Gewichtung und/oder Bewertung und/oder Plausibilitätskontrolle der Werte für Stützkraft oder Antriebskraft die Kalibrierkraft K ermittelt.

Ein relativ einfaches Szenario soll nachfolgend anhand von Figur 1 erläutert werden.

Wenn beispielsweise beim Kalibrieren der Lageröffnung 85 die Kalibrierkraft K unterhalb eines vorbestimmten Schwellenwerts oder oberhalb eines vorbestimmten Schwellenwertes ist, kann die Steuerungseinrichtung 11 beispielsweise die Vorschubbewegung des Kalibrierwerkzeugs 50a beenden und/oder an Anzeigemitteln 105, beispielsweise einer Anzeigeeinrichtung, ein Warnsignal ausgeben.

Die Steuerungseinrichtung 11 steuert den Antrieb 33a beispielsweise über ein Kontrollsignal C1 an. Das Kontrollsignal C1 kann zum Beispiel Steuerbefehle, zum Beispiel "Antrieb ein" oder "Antrieb aus", "Antriebskraft erhöhen" oder "Antriebskraft absenken" umfassen.

Die Anzeigemittel 105 umfasst beispielsweise einen Lautsprecher, eine Leuchtdiode, das Display der Steuerungseinrichtung 11 oder dergleichen.

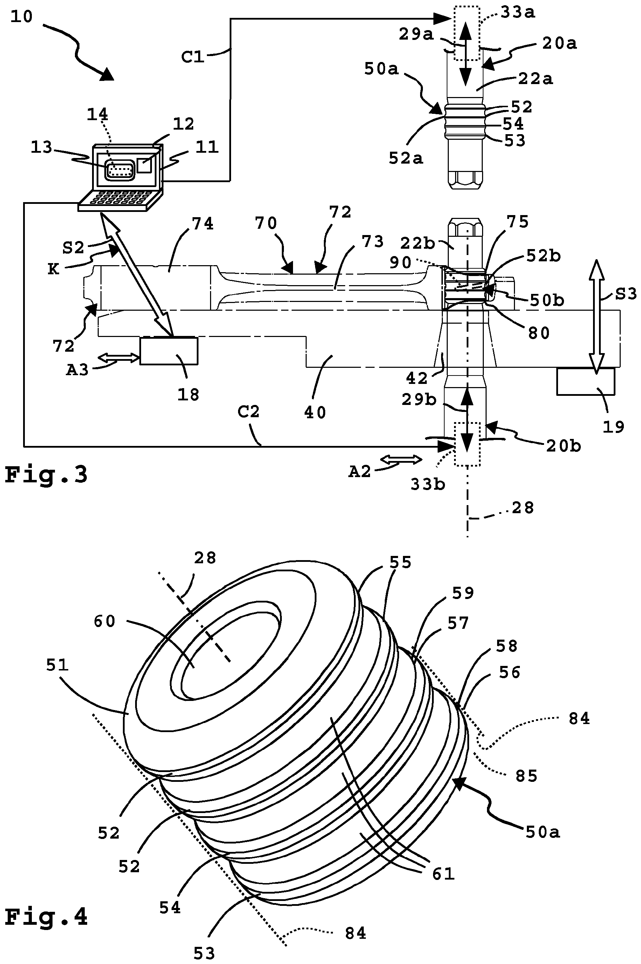

Wenn jedoch wie beispielsweise im Falle der Kalibriervorrichtung 10 gemäß Figur 3 weitere Kalibrierkonturen zur Verfügung stehen, sind auch die nachfolgenden Maßnahmen vorteilhaft möglich, bei denen die Kalibriervorrichtung 10 oder 110 sozusagen aktiv reagiert, wenn die Kalibrierkraft K nicht im einem vorgegebenen Rahmen ist.

Beispielsweise kann die Kalibriervorrichtung 10 gemäß Figur 3 die beim Kalibrieren der Lageröffnung 85 anhand entweder des Kalibrierwerkzeugs 50a oder des Kalibrierwerkzeugs 50b auftretende Kalibrierkraft K erfassen und das jeweils geeignete Kalibrierwerkzeug 50a oder 50b zum Kalibrieren der Lageröffnung 85 einsetzen.

Die Kalibrierwerkzeuge 50a und 50b haben beispielsweise Kalibrierkonturen, die unterschiedliche große Außendurchmesser aufweisen. So ist beispielsweise das Kalibrierwerkzeug 50a im Querschnitt größer als das Kalibrierwerkzeug 50b, so dass bei im Querschnitt gleich großer Lageröffnung 85 die Kalibrierkraft K beim Kalibrierwerkzeug 50a größer ist als beim Kalibrierwerkzeug 50b. Das Kalibrierwerkzeug 50a weist eine sozusagen eine erste Kalibrierkontur 52a auf, das Kalibrierwerkzeug 50b eine zweite Kalibrierkontur 52b, die im Querschnitt oder Außenumfang kleiner als die erste Kalibrierkontur 52a ist.

Vorteilhaft ist es daher, dass die Kalibriervorrichtung 10, 110 zunächst das im Querschnitt kleinere Kalibrierwerkzeug 50b zum Kalibrieren der Lageröffnung 85 sozusagen ausprobiert und bei zu geringer Kalibrierkraft K das im Querschnitt größere Kalibrierwerkzeug 50a einsetzt.

Beispielsweise steuert die Steuerungseinrichtung 11 den Antrieb 33a mit Steuerbefehlen C1 zum Vorschub des Kalibrierwerkzeugs 50a zum Kalibrieren der Lageröffnung 85 oder den Antrieb 33b mit Steuerbefehlen C2 zum Vorschub des Kalibrierwerkzeugs 50a zum Kalibrieren der Lageröffnung 85 an.

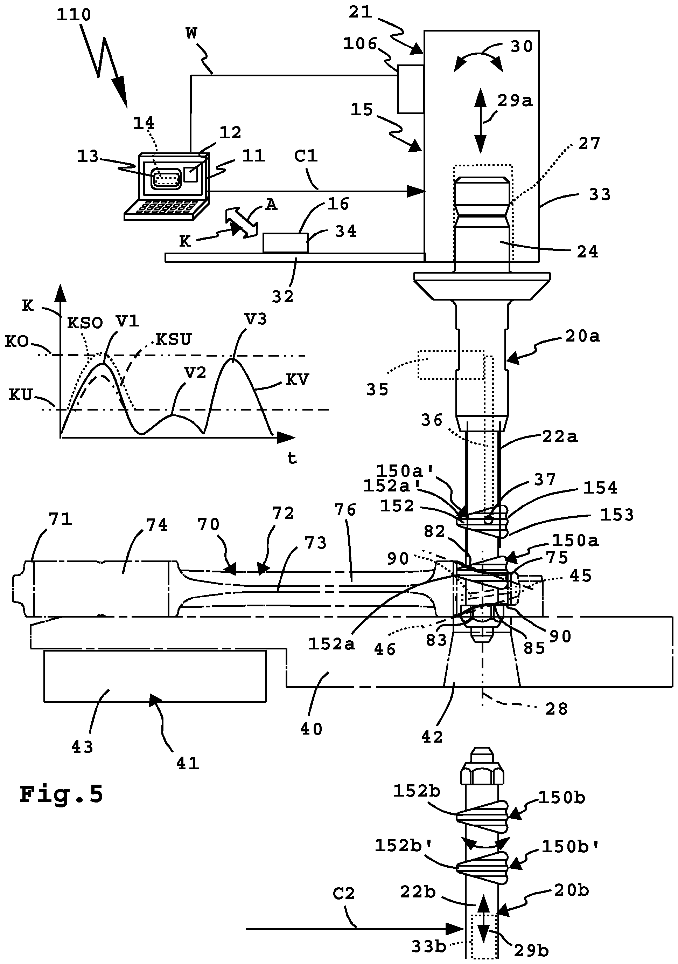

Bei der Kalibriervorrichtung 110 gemäß Figur 5 ist dies ebenfalls möglich. Zudem sind an den Werkzeugträgern 20a und 20b jeweils zwei Kalibrierwerkzeuge 150a, 150a' und 150b, 150b' vorgesehen. An dieser Stelle sei allerdings bemerkt, dass anders als in der Zeichnung dargestellt auch nur einer der Werkzeugträger 20a oder 20b vorgesehen sein kann, um die nachfolgend vorgestellte Kalibrierungstechnologie zu realisieren.

Die Kalibrierwerkzeuge 50a, 50a' haben beispielsweise jeweils einen größeren Außenumfang als die Kalibrierwerkzeuge 50b, 50b'. Allerdings hat das Kalibrierwerkzeug 50a einen kleineren Außenumfang als das Kalibrierwerkzeug 50a'. Die Situation ist bei den Kalibrierwerkzeugen 50b und 50b'gleich, bei denen das näher beim freien Ende des Werkzeugträgers 20b befindliche Kalibrierwerkzeug 50b einen kleineren Außenumfang hat als das bezüglich der Kalibrierungsbahn 28 beabstandete Kalibrierungswerkzeug 50b'.

Die Steuerungseinrichtung 11 kann also beispielsweise zunächst den Antrieb 30a zum Vorschub des Kalibrierwerkzeugs 50a in die Lageröffnung 85 ansteuern, was einem Kalibriervorgang V1 entspricht. Man erkennt in dem in Figur 5 eingeblendeten Diagramm der Kalibrierkraft K, dass beispielsweise beim Kalibriervorgang V1 die Kalibrierkraft K zwischen einem unteren Schwellenwert KU und einem oberen Schwellenwert KO liegt. Die Kalibrierung also in Ordnung ist.

Bei einem dann eingewechselten Werkstück 70, das beispielsweise eine Lageröffnung 85 mit einem größeren Innenquerschnitt aufweist, steuert die Steuerungseinrichtung 11 wiederum den Antrieb 33a zum Kalibrieren anhand des Kalibrierwerkzeugs 150a an, das eine erste Kalibrierkontur 152a aufweist. Allerdings ist bei diesem Kalibriervorgang V2 die Kalibrierkraft unterhalb des unteren Schwellenwerts KU, also nicht ausreichend. Sodann steuert die Steuerungseinrichtung 11 den Antrieb 33a zum weiteren Vorschub des Werkzeugträgers 20a in Richtung der Lageröffnung 85 an, so dass das bezüglich der Kalibrierungsbahn 28 hinter dem Kalibrierwerkzeug 150a angeordnete Kalibrierwerkzeug 150a', das eine zweite Kalibrierkontur 152a' mit einem größeren Außenumfang als die Kalibierkontur 152a aufweist, durch die Lageröffnung 85 geschoben wird. Bei diesem Kalibriervorgang V3 liegt die Kalibrierkraft K sozusagen im Rahmen, nämlich zwischen den Schwellenwerten KU und KO. Die Kalibrierung ist also in Ordnung.

Anstelle eines einfachen Schwellwertvergleichs ist es auch möglich, dass die Steuerungseinrichtung 11 beispielsweise einen Verlauf KV der Kalibrierkraft K mit vorbestimmten Verläufen vergleicht. Wenn also beispielsweise der Verlauf KV in einem Korridor zwischen einem gespeicherten unteren Verlauf KSU und einem gespeicherten oberen Verlauf KSO der Kalibrierkraft K während eines Kalibriervorgangs liegt, gilt die Kalibrierung als in Ordnung. Bei einer Abweichung kann die Kalibriervorrichtung 10, 110 beispielsweise an den Anzeigemitteln 105 eine Warnung ausgeben und/oder die Kalibrierung beenden und/oder die Kalibrierwerkzeuge austauschen oder andere Kalibrierwerkzeuge zum Einsatz bringen.

Ohne weiteres kann die Steuereinrichtung 11 aber auch anhand beispielsweise der Kalibrierwerkzeuge 150b und 150b' die Kalibrierung der Lageröffnung 85 noch verbessern, wie vorstehend schon beschrieben wurde. Weiterhin ist es aber auch möglich, dass die Kalibrierwerkzeuge 150b und 150b' alternativ zu den Kalibrierwerkzeugen 150a und 150a' eingesetzt werden, wenn nämlich bei den letztgenannten Kalibrierwerkzeugen die Kalibrierkraft K beim Kalibrieren nicht geeignet ist, so dass die Kalibrierwerkzeuge 150b oder 150b' besser geeignet sind. Die Steuerungseinrichtung 11 steuert also dann entsprechend den Antrieb 33b zu der Vorschubbewegung 29b an, während der Werkzeugträger 20a sozusagen im Freien und nicht störend geparkt ist. Die Kalibrierwerkzeuge 150b und 150b' haben beispielsweise ebenfalls erste und zweite Kalibrierkonturen 152b und 152b', die im Außenumfang unterschiedlich sind.

Vorteilhaft unterscheiden sich die Durchmesser der Kalibrierkonturen 152b und 152b' von den Durchmessern der Kalibrierkonturen 152a und 152a', sodass im Prinzip dritte und vierte Kalibrierkonturen durch die Steuerungseinrichtung 11 einsetzbar sind.

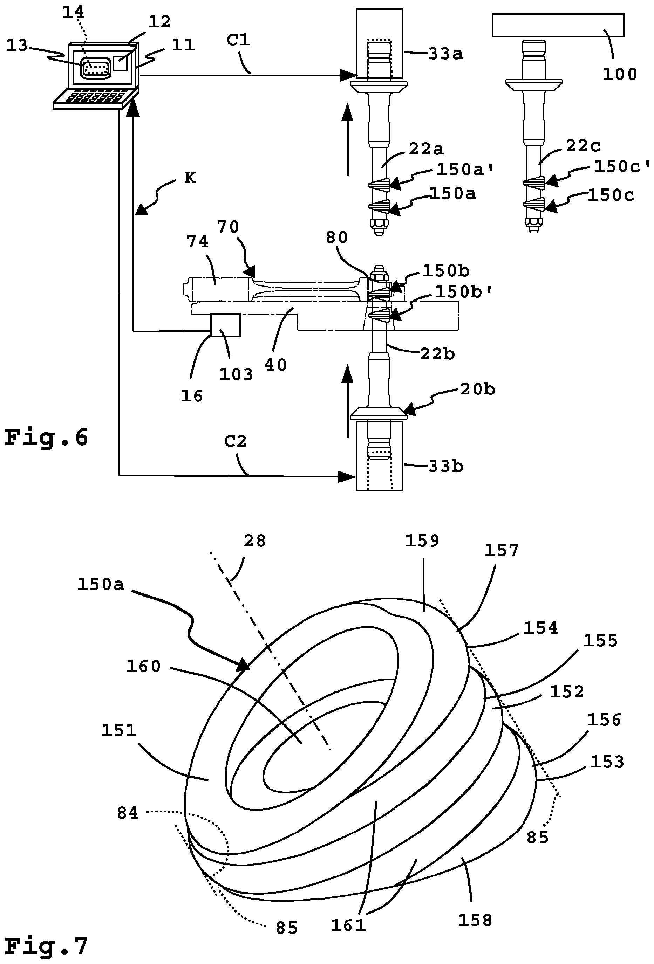

Es versteht sich, dass die Kalibrierwerkzeuge bzw. die unterschiedlich bemessenen Kalibrierkonturen nicht dauerhaft mit dem jeweiligen Antrieb 33a oder 33b verbunden sein müssen. Es ist auch eine Konfiguration mit einem Werkzeugwechsler oder einer Werkzeugwechseleinrichtung 100 möglich. Dies soll anhand von Figur 6 deutlich werden. Beispielsweise kann die Steuerungseinrichtung 11 dann, wenn die Kalibrierwerkzeuge 150a' oder 150a keine Kalibrierung mit geeigneter Kalibrierkraft K ermöglichen, vom Werkzeugwechsler oder der Werkzeugwechseleinrichtung an den einem Werkzeugträger 20c angeordnete Kalibrierwerkzeuge 150c und 150c' sozusagen abholen. Dazu ist beispielsweise eine entsprechende Querbewegung der Positioniereinrichtung 15 denkbar. Es ist aber auch möglich, dass die Werkzeugwechseleinrichtung 100 aktiv den Werkzeugträger 20a oder 20c an der Werkzeugaufnahme 23 anordnet, die Werkzeuge also aktiv ein wechselt. Die Kalibrierwerkzeuge 150a' und 150a und die Kalibrierwerkzeuge 150c' und 150c unterscheiden sich beispielsweise in Bezug auf ihren Außenumfang und/oder ihre Außengeometrie. Wie vorher erwähnt, ist vorteilhaft, wenn beispielsweise die näher beim freien Längsende des Werkzeugträgers 20a bzw. 20c befindlichen Kalibrierwerkzeuge 150a und 150c einen kleineren Außenumfang haben als die jeweils weiter davon entfernt in Kalibrierwerkzeuge 150a' und 150c'.

Der Verlauf der Kalibrierkraft K kann auch wegabhängig sein. Bevorzugt hat die Kalibriervorrichtung 10, 110 daher eine Wegmesseinrichtung 106, die zur Messung einer Weglängen der Vorschubbewegung 29 dient. Auf diesem Weg kann die Steuerungseinrichtung 11 zum Beispiel ermitteln, ob welches der Kalibrierwerkzeuge 50a oder 50a' bereits eine Kalibrierung durchgeführt hat.

## Patentansprüche

1. Kalibriervorrichtung zum Kalibrieren einer Lageröffnung (85) eines Werkstücks (70), insbesondere eines Motorbauteils (71), zum Beispiel eines Pleuels, wobei die Kalibriervorrichtung (10; 110) mindestens ein Kalibrierwerkzeug (50; 150) aufweist, das an seinem Außenumfang mindestens eine Kalibrierkontur (52; 152) aufweist, mit der eine als Lagerfläche dienende Lager-Innenkontur (84) der Lageröffnung (85) kalibrierbar ist, wobei zum Kalibrieren der Lageröffnung (85) die mindestens eine Kalibrierkontur (52; 152) durch eine Vorschubbewegung (29a, 29b) entlang einer Kalibrierungsbahn (28) an der Lager-Innenkontur (84) entlang bewegt wird, wobei die Kalibriervorrichtung (10; 110) eine Positioniereinrichtung (15) zum Positionieren des Werkstücks (70) und des mindestens einen Kalibrierwerkzeugs (50; 150) bezüglich der Kalibrierungsbahn (28) relativ zueinander aufweist, **dadurch gekennzeichnet, dass** die Kalibiervorrichtung eine Kraftmesseinrichtung (16) zur Erfassung einer bei dem Kalibrieren auf das Werkstück (70), insbesondere die Lager-Innenkontur (84), einwirkenden Kalibrierkraft (K) und eine Steuerungseinrichtung (11) zur Steuerung der Positioniereinrichtung (15) in Abhängigkeit von der Kalibrierkraft (K) aufweist, wobei sie eine erste Kalibrierkontur (52a) und mindestens eine zweite Kalibrierkontur (52b) aufweist, die an ihren Außenumfängen, insbesondere in Bezug auf ihren Durchmesser, unterschiedlich ausgestaltet sind, und dass die Steuerungseinrichtung (11) zur Ansteuerung der Positioniereinrichtung (15) in Abhängigkeit von der Kalibrierkraft (K) zum Vorschub der ersten Kalibrierkontur (52a) und/oder der mindestens einen zweiten Kalibrierkontur (52b) in die Lageröffnung (85) hinein oder durch die Lageröffnung (85) hindurch ausgestaltet ist.

2. Kalibriervorrichtung nach Anspruch 1, **dadurch gekennzeichnet, dass** die Kalibrierkraft (K) eine zu der Vorschubbewegung (29a, 29b) erforderliche Antriebskraft (A) der Positioniereinrichtung (15) und/oder eine auf das Kalibrierwerkzeug oder eine Werkstück-Halterung (40) zum Halten des Werkstücks (70) einwirkende Stützkraft (S1, S2) umfasst.

3. Kalibriervorrichtung nach Anspruch 1 oder 2, **dadurch gekennzeichnet, dass** die Steuerungseinrichtung (11) zur Ausgabe eines Warnsignals an Anzeigemitteln (105) der Kalibriervorrichtung (10; 110) und/oder zum Ansteuern, insbesondere Anhalten, der Vorschubbewegung der Positioniereinrichtung (15) in Abhängigkeit von einem Überschreiten eines Maximal-Schwellenwerts (KO) durch die Kalibrierkraft (K) oder einem Unterschreiten eines Minimal-Schwellenwerts (KU) durch die Kalibrierkraft (K) und/oder anhand eines Vergleichs eines Verlaufs (KV) der Kalibrierkraft (K) mit einem vorbestimmten Verlauf (KS) ausgestaltet ist.

4. Kalibriervorrichtung nach einem der vorhergehenden Ansprüche, **dadurch gekennzeichnet, dass** die erste Kalibrierkontur (52a) und die mindestens eine zweite Kalibrierkontur (52b) an einem gemeinsamen Werkzeugträger (20a, 20b) oder einen separaten Werkzeugträgern (20a, 20b) angeordnet sind.

5. Kalibriervorrichtung nach Anspruch 4, dass die Positioniereinrichtung (15) zum Vorschieben der ersten Kalibrierkontur (52a) und der mindestens einen zweiten Kalibrierkontur (52b) in die Lageröffnung (85) von derselben Seite her oder von einander entgegengesetzten Seiten her ausgestaltet ist.

6. Kalibriervorrichtung nach einem der vorhergehenden Ansprüche, **dadurch gekennzeichnet, dass** die erste Kalibrierkontur (52a) und die mindestens eine zweite Kalibrierkontur (52b) bezüglich der Kalibrierungsbahn (28) einen Längsabstand aufweisen.

7. Kalibriervorrichtung nach einem der vorhergehenden Ansprüche, **dadurch gekennzeichnet, dass** die erste Kalibrierkontur (52a) und/oder die mindestens eine zweite Kalibrierkontur (52b) einen Bestandteil eines Kalibrierwerkzeugs (50a, 50b) mit mindestens einer weiteren Kalibrierkontur (52) bildet.

8. Kalibriervorrichtung nach einem der vorhergehenden Ansprüche, **dadurch gekennzeichnet, dass** ein Abstand der ersten Kalibrierkontur (52a) und der mindestens einen zweiten Kalibrierkontur (52b) bezüglich der Kalibrierungsbahn (28) so bemessen ist, dass sie gleichzeitig in die Lageröffnung (85) oder nicht gleichzeitig in die Lageröffnung (85) eingreifen.

9. Kalibriervorrichtung nach einem der vorhergehenden Ansprüche, **dadurch gekennzeichnet, dass** sie eine Wegmesseinrichtung (106) zur Messung einer Weglänge der Vorschubbewegung (29a, 29b) aufweist.

10. Kalibriervorrichtung nach Anspruch 9, **dadurch gekennzeichnet, dass** die Steuerungseinrichtung (11) zur Steuerung der Positioniereinrichtung (15) in Abhängigkeit von einer Relation der Weglänge und der Kalibrierkraft (K) ausgestaltet ist.

11. Kalibriervorrichtung nach einem der vorhergehenden Ansprüche, **dadurch gekennzeichnet, dass** die Kraftmesseinrichtung (16) mindestens einen Dehnungsmessstreifen (102) und/oder eine Kraftmessdose (103) (103) und/oder eine kapazitive Messeinrichtung (104) und/oder eine Strommesseinrichtung (34) umfasst.

12. Kalibriervorrichtung nach einem der vorhergehenden Ansprüche, **dadurch gekennzeichnet, dass** sie eine Werkzeugwechseleinrichtung (100) zum Auswechseln des Kalibrierwerkzeugs oder eines das Kalibrierwerkzeug tragenden Werkzeugträgers (20a, 20b) aufweist und/oder dass die Positioniereinrichtung (15) zum Auswechseln des Kalibrierwerkzeugs oder eines des Kalibrierwerkzeug tragenden Werkzeugträgers (20a, 20b) ausgestaltet ist.

13. Kalibriervorrichtung nach einem der vorhergehenden Ansprüche, **dadurch gekennzeichnet, dass** die Positioniereinrichtung (15) eine Werkzeug-Positioniereinrichtung (21) zur Positionierung mindestens eines der Kalibrierwerkzeuge (50; 150) relativ zu dem Werkstück (70) und/oder eine Werkstück-Positioniereinrichtung (41) zur Positionierung des Werkstücks (70) relativ zu mindestens einem der Kalibrierwerkzeuge (50; 150) aufweist.

14. Kalibrierverfahren zum Kalibrieren einer Lageröffnung (85) eines Werkstücks (70), insbesondere eines Motorbauteils (71), zum Beispiel eines Pleuels, mit einer Kalibriervorrichtung (10; 110), die mindestens ein Kalibrierwerkzeug (50; 150) aufweist, das an seinem Außenumfang mindestens eine Kalibrierkontur (52) (52; 152) aufweist, mit der eine als Lagerfläche dienende Lager-Innenkontur (84) der Lageröffnung (85) kalibrierbar ist, wobei bei dem Kalibrierverfahren die mindestens eine Kalibrierkontur (52; 152) durch eine Vorschubbewegung (29a, 29b) entlang einer Kalibrierungsbahn (28) zum Kalibrieren der Lageröffnung (85) an der Lager-Innenkontur (84) entlang bewegt wird, wobei das Kalibrierverfahren ein Positionieren des Werkstücks (70) und des mindestens einen Kalibrierwerkzeugs (50; 150) bezüglich der Kalibrierungsbahn (28) relativ zueinander die Kalibriervorrichtung (10; 110) durch eine Positioniereinrichtung (15) umfasst, **gekennzeichnet durch**
- Erfassung einer bei dem Kalibrieren auf das Werkstück (70), insbesondere die Lager-Innenkontur (84), einwirkenden Kalibrierkraft (K) durch eine Kraftmesseinrichtung (16) und
Steuerung der Positioniereinrichtung (15) in Abhängigkeit von der Kalibrierkraft (K) durch eine Steuerungseinrichtung (11), wobei die Kalibriervorrichtung eine erste Kalibrierkontur (52a) und mindestens eine zweite Kalibrierkontur (52b) aufweist, die an ihren Außenumfängen, insbesondere in Bezug auf ihren Durchmesser, unterschiedlich ausgestaltet sind, und wobei die Steuerungseinrichtung (11) zur Ansteuerung der Positioniereinrichtung (15) in Abhängigkeit von der Kalibrierkraft (K) zum Vorschub der ersten Kalibrierkontur (52a) und/oder der mindestens einen zweiten Kalibrierkontur (52b) in die Lageröffnung (85) hinein oder durch die Lageröffnung (85) hindurch ausgestaltet ist.

## Claims

1. Calibration device for calibrating a bearing aperture (85) of a workpiece (70), in particular of an engine component (71) such as a connecting rod, wherein the calibration device (10; 110) comprises at least one calibration tool (50; 150) having at its outer circumference at least one calibration contour (52; 152), whereby a bearing inner contour (84) of the bearing aperture (85), which serves as a bearing surface, can be calibrated, wherein, for calibrating the bearing aperture (85), the at least one calibration contour (52; 152) is moved along the bearing inner contour (84) by an advance movement (29a, 29b) along a calibration track (28), wherein the calibration device (10; 110) comprises a positioning device (15) for positioning the workpiece (70) and the at least one calibration tool (50; 150) relative to each other in respect of the calibration track (28), **characterised in that** the calibration device comprises a force measuring device (16) for the detection of a calibration force (K) acting on the workpiece (70), in particular on the bearing inner contour (84), in the calibration process and a control device (11) for the control of the positioning device (15) as a function of the calibration force (K), wherein it comprises a first calibration contour (52a) and at least one second calibration contour (52b), which are designed differently at their outer circumferences, in particular in terms of their diameter, and **in that** the control device (11) is designed to activate the positioning device (15) as a function of the calibration force (K) for advancing the first calibration contour (52a) and/or the at least one second calibration contour (52b) into the bearing aperture (85) or through the bearing aperture (85).

2. Calibration device according to claim 1, **characterised in that** the calibration force (K) comprises a drive force (A) of the positioning device (15) required for the advance movement (29a, 29b) and/or a supporting force (S1, S2) acting on the calibration tool or a workholder (40) for holding the workpiece (70).

3. Calibration device according to claim 1 or 2, **characterised in that** the control device (11) is designed to output a warning signal to display means (105) of the calibration device (10; 110) and/or to control, in particular to stop, the advance movement of the positioning device (15) if a maximum threshold value (KO) is exceeded by the calibration force (K) or a minimum threshold value (KU) is undershot by the calibration force (K), and/or on the basis of a comparison of a progression (KV) of the calibration force (K) to a predetermined progression (KS).

4. Calibration device according to any of the preceding claims, **characterised in that** the first calibration contour (52a) and the at least one second calibration contour (52b) are located on a common tool carrier (20a, 20b) or on separate tool carriers (20a, 20b).

5. Calibration device according to claim 4, **characterised in that** the positioning device (15) is designed to advance the first calibration contour (52a) and the at least one second calibration contour (52b) into the bearing aperture (85) from the same side or from opposite sides.

6. Calibration device according to any of the preceding claims, **characterised in that** the first calibration contour (52a) and the at least one second calibration contour (52b) have a longitudinal distance relative to the calibration track (28).

7. Calibration device according to any of the preceding claims, **characterised in that** the first calibration contour (52a) and/or the at least one second calibration contour (52b) is/are a part of a calibration tool (50a, 50b) with at least one further calibration contour (52).

8. Calibration device according to any of the preceding claims, **characterised in that** a distance of the first calibration contour (52a) and the at least one second calibration contour (52b) relative to the calibration track (28) is dimensioned such that they engage with the bearing aperture (85) either simultaneously or not simultaneously.

9. Calibration device according to any of the preceding claims, **characterised in that** it comprises a position sensing device (106) for measuring a length of distance of the advance movement (29a, 29b).

10. Calibration device according to claim 9, **characterised in that** the control device (11) is designed to control the positioning device (15) as a function of a relation of the length of distance and the calibration force (K).

11. Calibration device according to any of the preceding claims, **characterised in that** the force measuring device (16) comprises at least one strain gauge (102) and/or a load cell (103) and/or a capacitive measuring device (4) and/or a current measuring device (34).

12. Calibration device according to any of the preceding claims, **characterised in that** it comprises a tool changing device (100) for changing the calibration tool or a tool carrier (20a, 20b) carrying the calibration tool, and/or **in that** the positioning device (15) is designed to change the calibration tool or a tool carrier (20a, 20b) carrying the calibration tool.

13. Calibration device according to any of the preceding claims, **characterised in that** the positioning device (15) comprises a tool positioning device (21) for positioning at least one of the calibration tools (50; 150) relative to the workpiece (70) and/or a work positioning device (41) for positioning the workpiece (70) relative to at least one of the calibration tools (50; 150).

14. Calibration method for calibrating a bearing aperture (85) of a workpiece (70), in particular of an engine component (71) such as a connecting rod, with a calibration device (10; 110) comprising at least one calibration tool (50; 150) having at its outer circumference at least one calibration contour (52; 152), whereby a bearing inner contour (84) of the bearing aperture (85), which serves as a bearing surface, can be calibrated, wherein in the calibration process the at least one calibration contour (52; 152) is moved along the bearing inner contour (84) by an advance movement (29a, 29b) along a calibration track (28) for calibrating the bearing aperture (85), wherein the calibration method comprises a positioning of the workpiece (70) and the at least one calibration tool (50; 150) relative to each other in respect of the calibration track (28) by the calibration device (10; 110) using a positioning device (15), **characterised by**
- the detection of a calibration force (K) acting on the workpiece (70), in particular on the bearing inner contour (84), in the calibration process by a force measuring device (16) and
- the control of the positioning device (15) as a function of the calibration force (K) by a control device (11), wherein the calibration device comprises a first calibration contour (52a) and at least one second calibration contour (52b), which are designed differently at their outer circumferences, in particular in terms of their diameter, and wherein the control device (11) is designed to control the positioning device (15) as a function of the calibration force (K) for advancing the first calibration contour (52a) and/or the at least one second calibration contour (52b) into the bearing aperture (85) or through the bearing aperture (85).

## Revendications

1. Dispositif d'étalonnage pour l'étalonnage d'une ouverture de palier (85) d'une pièce à usiner (70), en particulier d'un composant de moteur (71), par exemple d'une bielle, dans lequel le dispositif d'étalonnage (10 ; 110) présente au moins un outil d'étalonnage (50 ; 150), qui présente sur sa périphérie extérieure au moins un contour d'étalonnage (52 ; 152), avec lequel un contour intérieur de palier (84) servant de surface de palier de l'ouverture de palier (85) peut être étalonné, dans lequel pour l'étalonnage de l'ouverture de palier (85) l'au moins un contour d'étalonnage (52 ; 152) est déplacé par un mouvement d'avance (29a, 29b) le long d'une bande d'étalonnage (28) le long du contour intérieur de palier (84), dans lequel le dispositif d'étalonnage (10 ; 110) présente un dispositif de positionnement (15) pour le positionnement de la pièce à usiner (70) et l'au moins un outil d'étalonnage (50 ; 150) par rapport à la bande d'étalonnage (28) l'un par rapport à l'autre,
**caractérisé en ce que** le dispositif d'étalonnage présente un dispositif de mesure de force (16) pour la détection d'une force d'étalonnage (K) agissant lors de l'étalonnage sur la pièce à usiner (70), en particulier le contour intérieur de palier (84) et un dispositif de commande (11) pour la commande du dispositif de positionnement (15) en fonction de la force d'étalonnage (K), dans lequel il présente un premier contour d'étalonnage (52a) et au moins un second contour d'étalonnage (52b) qui sont configurés différemment sur leurs périphéries extérieures, en particulier par rapport à leur diamètre, et que le dispositif de commande (11) est configuré pour la commande du dispositif de positionnement (15) en fonction de la force d'étalonnage (K) pour l'avance du premier contour d'étalonnage (52a) et/ou l'au moins un second contour d'étalonnage (52b) dans l'ouverture de palier (85) ou au travers de l'ouverture de palier (85).

2. Dispositif d'étalonnage selon la revendication 1, **caractérisé en ce que** la force d'étalonnage (K) comporte une force d'entraînement (A) nécessaire au mouvement d'avance (29a, 29b) du dispositif de positionnement (15) et/ou une force d'appui (S1, S2) agissant sur l'outil d'étalonnage ou un support de pièce à usiner (40) pour le maintien de la pièce à usiner (70).

3. Dispositif d'étalonnage selon la revendication 1 ou 2, **caractérisé en ce que** le dispositif de commande (11) est configuré pour l'émission d'un signal d'avertissement aux moyens d'affichage (105) du dispositif d'étalonnage (10 ; 110) et/ou pour la commande, en particulier l'arrêt, du mouvement d'avance du dispositif de positionnement (15) en fonction d'un dépassement d'une valeur seuil maximale (KO) par la force d'étalonnage (K) ou une non atteinte d'une valeur seuil minimale (KU) par la force d'étalonnage (K) et/ou au moyen d'une comparaison d'une étendue (KV) de la force d'étalonnage (K) avec une étendue prédéterminée (KS).

4. Dispositif d'étalonnage selon l'une quelconque des revendications précédentes, **caractérisé en ce que** le premier contour d'étalonnage (52a) et l'au moins un second contour d'étalonnage (52b) sont agencés sur un support d'outil (20a, 20b) commun ou un support d'outil (20a, 20b) séparé.

5. Dispositif d'étalonnage selon la revendication 4, **caractérisé en ce que** le dispositif de positionnement (15) est configuré pour l'avance du premier contour d'étalonnage (52a) et l'au moins un second contour d'étalonnage (52b) dans l'ouverture de palier (85) du même côté ou de côtés opposés.

6. Dispositif d'étalonnage selon l'une quelconque des revendications précédentes, **caractérisé en ce que** le premier contour d'étalonnage (52a) et l'au moins un second contour d'étalonnage (52b) présentent par rapport à la bande d'étalonnage (28) une distance longitudinale.

7. Dispositif d'étalonnage selon l'une quelconque des revendications précédentes, **caractérisé en ce que** le premier contour d'étalonnage (52a) et/ou l'au moins un second contour d'étalonnage (52b) forme un élément d'un outil d'étalonnage (50a, 50b) avec au moins un autre contour d'étalonnage (52).

8. Dispositif d'étalonnage selon l'une quelconque des revendications précédentes, **caractérisé en ce qu'**une distance du premier contour d'étalonnage (52a) et l'au moins un second contour d'étalonnage (52b) est dimensionnée par rapport à la bande d'étalonnage (28) de sorte qu'ils viennent en prise simultanément dans l'ouverture de palier (85) ou non simultanément dans l'ouverture de palier (85).

9. Dispositif d'étalonnage selon l'une quelconque des revendications précédentes, **caractérisé en ce qu'**il présente un dispositif de mesure de course (106) pour la mesure d'une longueur de course du mouvement d'avance (29a, 29b).

10. Dispositif d'étalonnage selon la revendication 9, **caractérisé en ce que** le dispositif de commande (11) est configuré pour la commande du dispositif de positionnement (15) en fonction d'un rapport entre la longueur de course et de la force d'étalonnage (K).

11. Dispositif d'étalonnage selon l'une quelconque des revendications précédentes, **caractérisé en ce que** le dispositif de mesure de force (16) comporte au moins une jauge de contrainte (102) et/ou une cellule de charge (103) et/ou un dispositif de mesure capacitif (104) et/ou un dispositif de mesure de courant (34).

12. Dispositif d'étalonnage selon l'une quelconque des revendications précédentes, **caractérisé en ce qu'**il présente un dispositif de changement d'outil (100) pour le changement de l'outil d'étalonnage ou d'un support d'outil (20a, 20b) portant l'outil d'étalonnage et/ou que le dispositif de positionnement (15) est configuré pour le changement de l'outil d'étalonnage ou d'un support d'outil (20a, 20b) portant l'outil d'étalonnage.

13. Dispositif d'étalonnage selon l'une quelconque des revendications précédentes, **caractérisé en ce que** le dispositif de positionnement (15) présente un dispositif de positionnement d'outil (21) pour le positionnement d'au moins un des outils d'étalonnage (50 ; 150) par rapport à la pièce à usiner (70) et/ou un dispositif de positionnement de pièce à usiner (41) pour le positionnement de la pièce à usiner (70) par rapport à au moins un des outils d'étalonnage (50 ; 150).

14. Procédé d'étalonnage pour l'étalonnage d'une ouverture de palier (85) d'une pièce à usiner (70), en particulier d'un composant de moteur (71), par exemple d'une bielle, avec un dispositif d'étalonnage (10 ; 110) qui présente au moins un outil d'étalonnage (50 ; 150) qui présente sur sa périphérie extérieure au moins un contour d'étalonnage (52) (52 ; 152) avec lequel un contour intérieur de palier (84) servant de surface de palier de l'ouverture de palier (85) peut être étalonné, dans lequel lors du procédé d'étalonnage l'au moins un contour d'étalonnage (52 ; 152) est déplacé par un mouvement d'avance (29a, 29b) le long d'une bande d'étalonnage (28) pour l'étalonnage de l'ouverture de palier (85) le long du contour intérieur de palier (84), dans lequel le procédé d'étalonnage comporte un positionnement de la pièce à usiner (70) et de l'au moins un outil d'étalonnage (50 ; 150) par rapport à la bande d'étalonnage (28) l'un par rapport à l'autre le dispositif d'étalonnage (10 ; 110) par un dispositif de positionnement (15), **caractérisé par**
- la détection d'une force d'étalonnage (K) agissant lors de l'étalonnage sur la pièce à usiner (70), en particulier le contour intérieur de palier (84) par un dispositif de mesure de force (16) et
la commande du dispositif de positionnement (15) en fonction de la force d'étalonnage (K) par un dispositif de commande (11), dans lequel le dispositif d'étalonnage présente un premier contour d'étalonnage (52a) et au moins un second contour d'étalonnage (52b), qui sont configurés différemment sur leurs périphéries extérieures, en particulier par rapport à leur diamètre, et dans lequel le dispositif de commande (11) est configuré pour la commande du dispositif de positionnement (15) en fonction de la force d'étalonnage (K) pour l'avance du premier contour d'étalonnage (52a) et/ou de l'au moins un second contour d'étalonnage (52b) dans l'ouverture de palier (85) ou au travers de l'ouverture de palier (85).
